(19) Europäisches Patentamt
European Patent Office
Office européen des brevets

(11) EP 4 541 829 A1

# (12) EUROPEAN PATENT APPLICATION
published in accordance with Art. 153(4) EPC

(43) Date of publication:
**23.04.2025 Bulletin 2025/17**

(21) Application number: **22946939.0**

(22) Date of filing: **26.12.2022**

(51) International Patent Classification (IPC):
***C08G 18/10*** *(2006.01)* ***C09K 3/10*** *(2006.01)*

(52) Cooperative Patent Classification (CPC):
**C08G 18/10; C09K 3/10**

(86) International application number:
**PCT/JP2022/047915**

(87) International publication number:
**WO 2023/243124 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.06.2022 JP 2022096483**

(71) Applicant: **Sekisui Fuller Company, Ltd.**
**Tokyo 108-0075 (JP)**

(72) Inventor: **IKEUCHI, Takuto**
**Koka-shi, Shiga 528-8585 (JP)**

(74) Representative: **Ter Meer Steinmeister & Partner**
**Patentanwälte mbB**
**Nymphenburger Straße 4**
**80335 München (DE)**

## (54) CURABLE COMPOSITION FOR SEALING MATERIAL, AND PANEL STRUCTURE USING SAID CURABLE COMPOSITION

(57) The present invention provides a curable composition that can smoothly follow dimensional changes in a sealing section, the dimensional change being caused by the heat during a fire, can reliably maintain a filling state of the sealing section, can prevent flames from penetrating through the sealing section, and can thus impart excellent fire resistance to a building structure. A curable composition for a sealing material according to the present invention is characterized by including 100 parts by mass of a curable resin and 10 to 150 parts by mass of a poorly water-soluble phosphorus-based compound. A cured product of the curable composition can stably maintain the closing state of the sealing section during a fire.

EP 4 541 829 A1

## Description

### Technical Field

The present invention relates to a curable composition for a sealing material and a panel structure using the curable composition.

### Background Art

A panel structure of a building structure is constituted by disposing a panel member in the panel installation section of the building structure and filling gaps formed between the opposing surfaces of the panel installation section and the panel member, and gaps formed between the panel members (these gaps are also collectively referred to as "sealing sections"), with a sealing material. Members that constitute the sealing section of the building structure such as the panel installation section and the panel member are also collectively referred to as "sealing section constituent members".

In the above-mentioned panel structure, the sealing material made from an organic substance is vulnerable to combustion and may fall off from the sealing section in the event of a fire, allowing the flames to penetrate through the sealing section. Thus, with this panel structure, there is a problem in that the fire resistance of the wall of the building structure is insufficient.

Further, the heat of a fire may cause deformation such as shrinkage of the panel member, and the deformation of the panel member changes the dimensions of the sealing section. If the sealing material cannot follow the dimensional changes in the sealing section, the flames may penetrate through the sealing section. Thus, this panel structure has the same problem of insufficient fire resistance in the wall of the building structure.

PTL 1 discloses a fireproof sealing material including (A) a polyalkylene ether having a silicon-containing functional group at the end, the functional group being capable of forming a silanol group by hydrolysis, (B) a microencapsulated ammonium polyphosphate powder, (C) a calcium carbonate powder, and (D) a silanol condensation catalyst.

### Citation List

### Patent Literature

PTL 1: Japanese Patent Application Laid-Open No. Hei. 08-081674

### Summary of Invention

### Technical Problem

However, the above-mentioned fireproof sealing material experiences foaming due to the heat of a fire and afterwards forms a carbonized layer. The foaming makes the combustion residue brittle, and thus the sealing material is easily destroyed by the wind pressure of the combustion flames and falls off from the sealing section. Furthermore, the above-mentioned fireproof sealing material cannot follow the dimensional changes in the sealing section caused by panel member deformation, which is due to the heat of a fire. As a result, a gap is produced in the sealing section. Thus, the above-mentioned fireproof sealing material still has the problem of insufficient fire resistance.

Furthermore, the sealing material that is filled in the sealing section is often used in an exposed outdoor environment and is constantly exposed to rain. Such exposure causes the rubber elasticity to decrease further when heated to about 400°C, making it difficult for the sealing material to follow the dimensional changes in the sealing section and resulting in a problem of further decrease in the fire resistance.

The present invention provides a curable composition that can exhibit excellent rubber elasticity even when heated to about 400°C by heat during a fire after being exposed to moisture such as rain, can reliably maintain a filling state of a sealing section by smoothly following dimensional changes in the sealing section during the fire, can prevent flames from penetrating through the sealing section, and can thus impart excellent fire resistance to a building structure. The present invention also provides a panel structure using the curable composition.

### Solution to Problem

A curable composition for a sealing material of the present invention includes:

100 parts by mass of a curable resin; and

10 to 150 parts by mass of a poorly water-soluble phosphorus-based compound.

The curable composition for a sealing material of the present invention preferably includes:

100 parts by mass of a polyalkylene oxide having a hydrolyzable silyl group;
10 to 150 parts by mass of a poorly water-soluble phosphorus-based compound; and
a silanol condensation catalyst.

[Curable resin]

Examples of the curable resin include a one-component curable resin and a two-component curable resin. Examples of the one-component curable resin include a resin that is cured by the introduction of a crosslinking structure caused by moisture, light irradiation, or heat, and a dry-curing resin that is cured by the evaporation of a solvent such as water. Examples of the two-component curable resin include a resin that is cured by the introduction of a crosslinking structure caused by mixing a main agent and a curing agent.

[One-component curable resin]

Examples of the one-component curable resin include a polymer having a hydrolyzable silyl group, a hydrolysis-crosslinkable silicone resin, a urethane prepolymer having an isocyanate group, a dry-curing acrylic polymer, and a photo-crosslinkable polymer. Among these, a polymer having a hydrolyzable silyl group, a urethane prepolymer having an isocyanate group, and a dry-curing acrylic polymer are preferable, and it is preferable to include a polymer having a hydrolyzable silyl group.

[Polymer having hydrolyzable silyl group]

In the presence of water, a polymer having a hydrolyzable silyl group generates a silanol group (≡SiOH) through hydrolysis of a hydrolyzable group of the hydrolyzable silyl group. The resulting silanol groups then undergo dehydration condensation to form a crosslinked structure.

The hydrolyzable silyl group is a group in which 1 to 3 hydrolyzable groups are bonded to a silicon atom. The hydrolyzable group of the hydrolyzable silyl group is not particularly limited, and examples thereof include a hydrogen atom, a halogen atom, an alkoxy group, an acyloxy group, a ketoximate group, an amino group, an amide group, an acid amide group, an aminooxy group, a mercapto group, an alkenyloxy group, and an oxime group.

Among these, the hydrolyzable silyl group is preferably an alkoxysilyl group because the hydrolysis reaction is mild. Examples of the alkoxysilyl group include: a trialkoxysilyl group such as a trimethoxysilyl group, a triethoxysilyl group, a triisopropoxysilyl group, and a triphenoxysilyl group; a dialkoxysilyl group such as a propyldimethoxysilyl group, a methyldimethoxysilyl group, and a methyldiethoxysilyl group; and a monoalkoxysilyl group such as a dimethylmethoxysilyl group and a dimethylethoxysilyl group.

The polymer having a hydrolyzable silyl group is not particularly limited, and examples thereof include a polyalkylene oxide having a hydrolyzable silyl group, an acrylic polymer having a hydrolyzable silyl group, a urethane resin having a hydrolyzable silyl group, and a polyolefin-based resin having a hydrolyzable silyl group. The polymer having a hydrolyzable silyl group preferably includes a polyalkylene oxide having a hydrolyzable silyl group. The polymer having a hydrolyzable silyl group may be used singly or in combination of two or more types thereof.

The content of the polymer having a hydrolyzable silyl group in the curable resin is preferably 50% by mass or more, more preferably 60% by mass or more, more preferably 70% by mass or more, more preferably 80% by mass or more, more preferably 90% by mass or more, and more preferably 100% by mass.

[Polyalkylene oxide having hydrolyzable silyl group]

The polyalkylene oxide has a hydrolyzable silyl group, and preferably has a hydrolyzable silyl group at the end of the main chain. In the polyalkylene oxide having a hydrolyzable silyl group, the hydrolyzable group of the hydrolyzable silyl group is hydrolyzed in the presence of water to generate a silanol group (-SiOH). Then, the silanol groups undergo dehydration condensation to form a crosslinked structure.

The hydrolyzable silyl group contained in the polyalkylene oxide having a hydrolyzable silyl group is preferably an alkoxysilyl group because the hydrolysis reaction is mild. The alkoxysilyl group is more preferably a dialkoxysilyl group, more preferably a dimethoxysilyl group and a methyldimethoxysilyl group, and more preferably a methyldimethoxysilyl group.

The polyalkylene oxide having a hydrolyzable silyl group preferably has 1 to 4 hydrolyzable silyl groups on

average within one molecule. The polyalkylene oxide having a hydrolyzable silyl group, of which the number in the polyalkylene oxide having a hydrolyzable silyl group falls within the above-mentioned range, can allow a cured product of the curable composition to maintain excellent rubber elasticity even when heated to about 400°C, to smoothly follow dimensional changes in the sealing section caused by heat of a fire, and to stably maintain the filling state of the sealing section. Furthermore, a combustion residue of the cured product of the curable composition can be stably held in the sealing section, making it possible to maintain the fire resistance of the building structure. The polyalkylene oxide having a hydrolyzable silyl group preferably has hydrolyzable silyl groups at both ends of the main chain.

The average number of the hydrolyzable silyl groups per molecule in the polyalkylene oxide having a hydrolyzable silyl group can be calculated on the basis of the concentration of the hydrolyzable silyl groups in the polyalkylene oxide determined by $^1$H-NMR and the number-average molecular weight of the polyalkylene oxide determined by a GPC method.

Preferable examples of the polyalkylene oxide constituting the polyalkylene oxide having a hydrolyzable silyl group include a polymer whose main chain includes a repeating unit represented by the general formula: $-(R-O)_n-$(where R represents an alkylene group having 1 to 14 carbon atoms, and n is a positive integer representing the number of repeating units). The main chain skeleton of the polyalkylene oxide may include a single type of repeating unit alone or two or more types of repeating units.

In the present invention, the alkylene group refers to a divalent atomic group resulting from the removal of two hydrogen atoms bonded to two different carbon atoms in an aliphatic saturated hydrocarbon, and includes both linear and branched atomic groups.

Examples of the alkylene group include an ethylene group, a propylene group [$-CH(CH_3)-CH_2-$], a trimethylene group [$-CH_2-CH_2-CH_2-$], a butylene group, an amylene group [$-(CH_2)_5-$], and a hexylene group.

Examples of the main chain skeleton of the polyalkylene oxide include a polyethylene oxide, a polypropylene oxide, a polybutylene oxide, a polytetramethylene oxide, a polyethylene oxide-polypropylene oxide copolymer, and a polypropylene oxide-polybutylene oxide copolymer. Among these, a polypropylene oxide is preferable. Such a polypropylene oxide can allow the cured product of the curable composition to maintain excellent rubber elasticity even when heated to about 400°C, and also can allow the combustion residue of the cured product of the curable composition to be stably held in the sealing section.

In the polyalkylene oxide having a hydrolyzable silyl group, the hydrolyzable silyl group is preferably bonded to the end of the main chain via an alkylene group having 1 to 25 carbon atoms (preferably an alkylene group having 1 to 6 carbon atoms). The polyalkylene oxide having the hydrolyzable silyl group bonded to the main chain via the alkylene group having 1 to 25 carbon atoms enhances the flexibility of the cured product of the curable composition.

In the polyalkylene oxide having a hydrolyzable silyl group, the hydrolyzable silyl group may be bonded to the end of the main chain via a urethane bond. The polyalkylene oxide having the hydrolyzable silyl group bonded to the end of the main chain via the urethane bond enhances the flexibility of the cured product of the curable composition. Since the flexibility of the cured product of the curable composition is enhanced, the hydrolyzable silyl group is preferably bonded to the end of the main chain via the urethane bond and the alkylene group (preferably the alkylene group having 1 to 25 carbon atoms).

The number-average molecular weight of the polyalkylene oxide having a hydrolyzable silyl group is preferably 3,000 or more, and more preferably 10,000 or more. The number-average molecular weight of the polyalkylene oxide having a hydrolyzable silyl group is preferably 50,000 or less, and more preferably 30,000 or less. The polyalkylene oxide having a number-average molecular weight of 3,000 or more allows the cured product of the curable composition to maintain excellent rubber elasticity even when heated to about 400°C. The polyalkylene oxide having a number-average molecular weight of 50,000 or less can allow the cured product of the curable composition to maintain excellent rubber elasticity even when heated to about 400°C by the heat of a fire, to smoothly follow the dimensional changes in the sealing section caused by the heat of a fire, and to stably maintain the filling state of the sealing section.

In the present invention, the number-average molecular weight of the polyalkylene oxide having a hydrolyzable silyl group is a polystyrene-equivalent value measured by a GPC (gel permeation chromatography) method. Specifically, 6 to 7 mg of the polyalkylene oxide having a hydrolyzable silyl group is collected, the collected polyalkylene oxide is put in a test tube, and then an o-DCB (ortho-dichlorobenzene) solution containing 0.05% by mass of BHT (dibutylhydroxytoluene) is added to the test tube to dilute the polyalkylene oxide to a concentration of 1 mg/mL, thereby producing a diluted solution.

The diluted solution is shaken at a rotation speed of 25 rpm for 1 hour at 145°C using a dissolution and filtration device to dissolve the polyalkylene oxide in the o-DCB solution containing BHT, producing a measurement sample. Using this measurement sample, the number-average molecular weight of the polyalkylene oxide can be measured by the GPC method.

The number-average molecular weight of the polyalkylene oxide having a hydrolyzable silyl group can be measured, for example, using the following measuring device and under the following measuring conditions.

Measuring device: Product name "HLC-8121GPC/HT" manufactured by Tosoh Corp.

Measuring conditions
Column: TSKgelGMHHR-H(20)HT × 3
TSKguardcolumn-HHR(30)HT × 1

Mobile phase: o-DCB 1.0 mL/min
Sample concentration: 1 mg/mL
Detector: Bryce-type refractometer
Reference substance: Polystyrene (manufactured by Tosoh Corp. Molecular weight: 500 to 8,420,000)
Elution condition: 145°C
SEC temperature: 145°C

The content of the polyalkylene oxide having a hydrolyzable silyl group in the curable resin is preferably 50% by mass or more, more preferably 60% by mass or more, more preferably 70% by mass or more, more preferably 80% by mass or more, more preferably 90% by mass or more, and more preferably 100% by mass.

As the polyalkylene oxide having a hydrolyzable silyl group, a commercially available product can be used. Examples of the polyalkylene oxide having a hydrolyzable silyl group include: those manufactured by Kaneka Corp. under the product names "MS Polymer S-203", "MS Polymer S-303", "SILYL Polymer SAT-200", "SILYL Polymer SAT-350", and "SILYL Polymer SAT-400"; and those manufactured by AGC Inc. under the product names "EXESTAR S3620", "EXESTAR S2420", "EXESTAR S2410", and "EXESTAR S3430".

A polyalkylene oxide in which the main chain is a polypropylene oxide and a (methoxymethyl)dimethoxysilyl group is included at the end of the polypropylene oxide is commercially available from Kaneka Corp. under the product name "HS-2".

A polyalkylene oxide in which the main chain is a polypropylene oxide and an isopropyldimethoxymethylsilyl group is included at the end of the polypropylene oxide is commercially available from Kaneka Corp. under the product name "SAX720".

[Acrylic polymer having hydrolyzable silyl group]

The hydrolyzable silyl group contained in the acrylic polymer having a hydrolyzable silyl group is preferably an alkoxysilyl group, more preferably a dialkoxysilyl group, more preferably a methyldimethoxysilyl group, because the hydrolysis reaction is mild.

In the acrylic polymer having a hydrolyzable silyl group, the average number of the hydrolyzable silyl groups per molecule is preferably 1 or more, and more preferably 2 or more. In the acrylic polymer having a hydrolyzable silyl group, the average number of the hydrolyzable silyl groups per molecule is preferably 4 or less, and more preferably 3 or less. The acrylic polymer having a hydrolyzable silyl group, of which the average number per molecule falls within the above-mentioned range, can allow the cured product of the curable composition to maintain excellent rubber elasticity even when heated to about 400°C, to smoothly follow the dimensional changes in the sealing section caused by the heat of a fire, and to stably maintain the filling state of the sealing section. Further, the combustion residue of the cured product of the curable composition can be stably held in the sealing section, making it possible to maintain the fire resistance of the building structure. The acrylic polymer having a hydrolyzable silyl group preferably has the hydrolyzable silyl group at least at one of both ends of the main chain.

The acrylic polymer having a hydrolyzable silyl group may be used in combination with an acrylic polymer having no hydrolyzable silyl group. In this case, the average number of the hydrolyzable silyl groups per molecule in the total of both is preferably 0.3 or more, and more preferably 0.5 or more. The acrylic polymer having a hydrolyzable silyl group, of which the average number is 0.3 or more, enhances the curability of the curable composition. On the other hand, the average number of the hydrolyzable silyl groups per molecule in the total of both is preferably 2.0 or less, and more preferably 1.8 or less. The acrylic polymer having a hydrolyzable silyl group, of which the average number is 2.0 or less, can allow the cured product of the curable composition to maintain excellent rubber elasticity even when heated by the heat during a fire or the like after being exposed to moisture such as rainwater.

A method for introducing the hydrolyzable silyl group into the acrylic polymer is not particularly limited, and examples thereof include a method in which an unsaturated group is introduced into a copolymer of monomers constituting the main chain skeleton, and then a hydrosilane having a hydrolyzable silyl group is caused to react with the unsaturated group for hydrosilylation.

Note that the average number of the hydrolyzable silyl groups per molecule in the acrylic polymer having a hydrolyzable silyl group is calculated on the basis of the concentration of the hydrolyzable silyl groups in the acrylic polymer having a hydrolyzable silyl group determined by $^1$H-NMR and the number-average molecular weight of the acrylic polymer having a hydrolyzable silyl group determined by the GPC method.

Specific examples of (meth)acrylate-based monomers constituting the main chain of the acrylic polymer having a

hydrolyzable silyl group include methyl (meth)acrylate, ethyl (meth)acrylate, propyl (meth)acrylate, n-butyl (meth)acrylate, tert-butyl (meth)acrylate, cyclohexyl (meth)acrylate, 2-ethylhexyl (meth)acrylate, n-octyl (meth)acrylate, isooctyl (meth)acrylate, isononyl (meth)acrylate, isomyristyl (meth)acrylate, stearyl (meth)acrylate, isobornyl (meth)acrylate, benzyl (meth)acrylate, 2-butoxyethyl (meth)acrylate, 2-phenoxyethyl (meth)acrylate, glycidyl (meth)acrylate, tetrahydrofurfuryl (meth)acrylate, hexanediol di(meth)acrylate, ethylene glycol di(meth)acrylate, propylene glycol di(meth)acrylate, neopentyl glycol di(meth)acrylate, trimethylolpropane tri(meth)acrylate, pentaerythritol di(meth)acrylate, pentaerythritol tri(meth)acrylate, pentaerythritol tetra(meth)acrylate, dipentaerythritol hexa(meth)acrylate, epoxy(meth)acrylate, polyester(meth)acrylate, urethane(meth)acrylate, 2-hydroxyethyl(meth)acrylate, 3-hydroxypropyl(meth)acrylate, 2-hydroxypropyl(meth)acrylate, 4-hydroxybutyl(meth)acrylate, 2-hydroxybutyl(meth)acrylate, 5-hydroxypentyl(meth)acrylate, 6-hydroxyhexyl(meth)acrylate, 3-hydroxy-3-methylbutyl(meth)acrylate, 2-hydroxy-3-phenoxypropyl(meth)acrylate, 2-[acryloyloxy]ethyl-2-hydroxyethyl phthalic acid, and 2-[acryloyloxy]ethyl-2-hydroxypropyl phthalic acid. These (meth)acrylate monomers may be used singly or in combination of two or more types thereof. The (meth)acrylate means methacrylate and/or acrylate.

In the acrylic polymer having a hydrolyzable silyl group, monomers used in the polymer constituting the main chain skeleton may further contain other monomers in addition to the (meth)acrylate-based monomers described above. Examples of the other monomers include styrene, indene, styrene derivatives such as $\alpha$-methylstyrene, p-methylstyrene, p-chlorostyrene, p-chloromethylstyrene, p-methoxystyrene, p-tert-butoxystyrene, and divinylbenzene, compounds with a vinyl ester group such as vinyl acetate, vinyl propionate, vinyl butyrate, vinyl caproate, vinyl benzoate, and vinyl cinnamate; maleic anhydride, N-vinylpyrrolidone, N-vinylmorpholine, methacrylonitrile, acrylonitrile, acrylamide, methacrylamide, N-cyclohexylmaleimide, N-phenylmaleimide, N-laurylmaleimide, N-benzylmaleimide; and compounds with a vinyloxy group such as n-propyl vinyl ether, n-butyl vinyl ether, isobutyl vinyl ether, tert-butyl vinyl ether, tert-amyl vinyl ether, cyclohexyl vinyl ether, 2-ethylhexyl vinyl ether, dodecyl vinyl ether, octadecyl vinyl ether, 2-chloroethyl vinyl ether, ethylene glycol butyl vinyl ether, triethylene glycol methyl vinyl ether, (4-vinyloxy)butyl benzoate, ethylene glycol divinyl ether, diethylene glycol divinyl ether, triethylene glycol divinyl ether, tetraethylene glycol divinyl ether, butane-1,4-diol-divinyl ether, hexane-1,6-diol-divinyl ether, cyclohexane-1,4-dimethanol-divinyl ether, di(4-vinyloxy)butyl isophthalate, di(4-vinyloxy)butyl glutarate, di(4-vinyloxy)butyl succinate, trimethylolpropane trivinyl ether, 2-hydroxyethyl vinyl ether, 4-hydroxybutyl vinyl ether, 6-hydroxyhexyl vinyl ether, cyclohexane-1,4-dimethanol monovinyl ether, diethylene glycol monovinyl ether, 3-aminopropyl vinyl ether, 2-(N,N-diethylamino)ethyl vinyl ether, urethane vinyl ether, and polyester vinyl ether. These monomers may be used singly or in combination of two or more types thereof.

The main chain skeleton of the acrylic polymer having a hydrolyzable silyl group is preferably a copolymer of monomers including butyl (meth)acrylate and stearyl (meth)acrylate, more preferably a copolymer of monomers including butyl acrylate and stearyl acrylate. An acrylic polymer having a hydrolyzable silyl group and also having the above-mentioned copolymer as the main chain skeleton has a flexible main chain skeleton and thus can provide a curable composition that exhibits high rubber elasticity after curing. The cured product of such a curable composition can maintain excellent rubber elasticity even when heated by heat during a fire or the like after being exposed to moisture such as rainwater.

In the acrylic polymer having a hydrolyzable silyl group, the content of the butyl (meth)acrylate component is preferably 30% by mass or more, more preferably 50% by mass or more, and more preferably 60% by mass or more. In the acrylic polymer having a hydrolyzable silyl group, the content of the butyl (meth)acrylate component is preferably 97% by mass or less, more preferably 95% by mass or less, and more preferably 85% by mass or less. The butyl (meth)acrylate component contained in an amount of 30% by mass or more enhances the flexibility of the main chain skeleton of the acrylic polymer having a hydrolyzable silyl group, making it possible to provide a curable composition that exhibits high rubber elasticity after curing. The cured product of such a curable composition can maintain excellent rubber elasticity even when heated by the heat during a fire or the like after being exposed to moisture such as rainwater.

In the acrylic polymer having a hydrolyzable silyl group, the content of the stearyl (meth)acrylate component is preferably 3% by mass or more, more preferably 5% by mass or more, and more preferably 15% by mass or more. In the acrylic polymer having a hydrolyzable silyl group, the content of the stearyl (meth)acrylate component is preferably 70% by mass or less, more preferably 50% by mass or less, and more preferably 40% by mass or less. The stearyl (meth)acrylate component contained in an amount of 3% by mass or more prevents the main chain skeleton of the acrylic polymer from being cleaved even when the cured product of the curable composition is heated by the heat of a fire or the like. This allows the combustion residue of the cured product of the curable composition to be stably held in the sealing section, making it possible to maintain the fire resistance of the building structure. The stearyl (meth)acrylate component contained in an amount of 70% by mass or less enhances the flexibility of the main chain skeleton of the acrylic polymer having a hydrolyzable silyl group, making it possible to provide a curable composition that exhibits high rubber elasticity after curing. The cured product of such a curable composition can maintain excellent rubber elasticity even when heated by the heat during a fire or the like after being exposed to moisture such as rainwater.

The polymerization method of the acrylic polymer having a hydrolyzable silyl group is not particularly limited, and known methods can be used. Examples thereof include various polymerization methods such as a free-radical polymerization method, an anionic polymerization method, a cationic polymerization method, a UV radical polymerization method, a living anionic polymerization method, a living cationic polymerization method, and a living radical polymerization method.

The weight-average molecular weight of the acrylic polymer having a hydrolyzable silyl group is preferably 1,000 to 50,000, more preferably 10,000 to 40,000, and particularly preferably 20,000 to 38,000. The acrylic polymer having a hydrolyzable silyl group having a weight-average molecular weight falling within the above-described range has a flexible main chain skeleton and thus can provide a curable composition that exhibits high rubber elasticity after curing. The cured product of such a curable composition can maintain excellent rubber elasticity even when heated by heat during a fire or the like after being exposed to moisture such as rainwater.

The weight-average molecular weight of the acrylic polymer having a hydrolyzable silyl group means a polystyrene-equivalent value measured by a GPC (gel permeation chromatography) method. In the GPC method, a GPC column, for example, Shodex KF800D manufactured by Tosoh Corporation can be used, and chloroform or the like can be used as a solvent.

The content of the acrylic polymer having a hydrolyzable silyl group in the curable resin is preferably 50% by mass or more, more preferably 60% by mass or more, more preferably 70% by mass or more, more preferably 80% by mass or more, more preferably 90% by mass or more, and more preferably 100% by mass.

[Urethane resin having hydrolyzable silyl group]

A urethane resin refers to a polymer having a main chain formed by repeating a urethane bond (-NHCOO-). A urethane resin having a hydrolyzable silyl group has a plurality of hydrolyzable silyl groups in the main chain of the urethane resin. The urethane resin having a hydrolyzable silyl group preferably has hydrolyzable silyl groups at both ends of the main chain of the urethane resin.

The hydrolyzable silyl group contained in the urethane resin having a hydrolyzable silyl group is preferably an alkoxysilyl group because the hydrolysis reaction is mild. As the alkoxysilyl group, a dialkoxysilyl group is more preferable, a dimethoxysilyl group and a methyldimethoxysilyl group are more preferable, and a methyldimethoxysilyl group is more preferable. The urethane resin having a hydrolyzable silyl group preferably does not have an isocyanate group.

The urethane resin having a hydrolyzable silyl group preferably has 1 to 4 hydrolyzable silyl groups on average within one molecule. The urethane resin having a hydrolyzable silyl group, of which the number in the urethane resin falls within the above-mentioned range, can allow a cured product of the curable composition to maintain excellent rubber elasticity even when heated to about 400°C, to smoothly follow dimensional changes in the sealing section caused by heat of a fire, and to stably maintain the filling state of the sealing section. Further, a combustion residue of the cured product of the curable composition can be stably held in the sealing section, making it possible to maintain the fire resistance of the building structure.

The average number of the hydrolyzable silyl groups per molecule in the urethane resin having a hydrolyzable silyl group can be calculated on the basis of the concentration of the hydrolyzable silyl group in the urethane resin determined by $^{1}$H-NMR and the number-average molecular weight of the urethane resin determined by a GPC method.

The weight-average molecular weight of the urethane resin having a hydrolyzable silyl group is preferably 1,000 to 50,000, more preferably 2,000 to 30,000, and particularly preferably 3,000 to 15,000. The urethane resin having a hydrolyzable silyl group having a weight-average molecular weight falling within the above-described range has a flexible main chain skeleton and thus can provide a curable composition that exhibits high rubber elasticity after curing. The cured product of such a curable composition can maintain excellent rubber elasticity even when heated by heat during a fire or the like after being exposed to moisture such as rainwater.

The weight-average molecular weight of the urethane resin having a hydrolyzable silyl group means a polystyrene-equivalent value measured by a GPC (gel permeation chromatography) method. In the GPC method, a GPC column, for example, Shodex KF800D manufactured by Tosoh Corporation can be used, and chloroform or the like can be used as a solvent.

The content of the urethane resin having a hydrolyzable silyl group in the curable resin is preferably 50% by mass or more, more preferably 60% by mass or more, more preferably 70% by mass or more, more preferably 80% by mass or more, more preferably 90% by mass or more, and more preferably 100% by mass.

[Polyolefin-based resin having hydrolyzable silyl group]

Examples of the polyolefin-based resin include a polyethylene-based resin and a polypropylene-based resin. The polyolefin-based resin having a hydrolyzable silyl group has a plurality of hydrolyzable silyl groups in the main chain of the polyolefin-based resin. The polyolefin-based resin having a hydrolyzable silyl group preferably has hydrolyzable silyl groups at both ends of the main chain of the polyolefin-based resin.

[Hydrolysis-crosslinkable silicone resin]

The hydrolysis-crosslinkable silicone resin refers to a polymer having a molecular chain formed by repeating a siloxane bond (-Si-O-). In the hydrolysis-crosslinkable silicone resin, a hydrolyzable group is bonded to some of the silicon atoms constituting the main chain of the silicone resin.
The hydrolyzable group is not particularly limited, and examples thereof include a hydrogen atom, a halogen atom, an alkoxy group, an acyloxy group, a ketoximate group, an amino group, an amide group, an acid amide group, an aminooxy group, a mercapto group, and an alkenyloxy group, and an alkoxy group is preferable.
Examples of the alkoxy group include a methoxy group, an ethoxy group, a propoxy group, and a butoxy group, and a methoxy group and an ethoxy group are preferable.
The hydrolysis-crosslinkable silicone resin undergoes a condensation reaction at the hydrolyzable group by using a catalyst or the like as necessary in the presence of moisture or a crosslinking agent to form a crosslinked structure. The hydrolysis-crosslinkable silicone resin that contains an alkoxy group as the hydrolyzable group generates a hydroxy group by hydrolyzing some of the alkoxy groups, and forms a crosslinked structure by undergoing a dealcoholization condensation reaction between the hydroxy group and the alkoxy group.
The content of the hydrolyzable group in the hydrolysis-crosslinkable silicone resin is preferably 5% by mass or more, and more preferably 10% by mass or more. The content of the hydrolyzable group in the hydrolysis-crosslinkable silicone resin is preferably 50% by mass or less, more preferably 40% by mass or less, and more preferably 35% by mass or less.
The viscosity of the hydrolysis-crosslinkable silicone resin at 25°C is preferably 5 Pa·s or more, more preferably 10 mPa·s or more, and even more preferably 13 Pa·s or more. The viscosity of the hydrolysis-crosslinkable silicone resin at 25°C is preferably 25 Pa·s or less, more preferably 22 Pa·s or less, and even more preferably 19 Pa·s or less. The viscosity of the hydrolysis-crosslinkable silicone resin at 25°C refers to a value measured by using a B-type viscometer (for example, product name "DV-E rotational viscometer" manufactured by BROOKFIELD Corporation) and setting the rotational speed of the spindle (RV-2) to 10 rpm.
The content of the hydrolysis-crosslinkable silicone resin in the curable resin is preferably 50% by mass or more, more preferably 60% by mass or more, more preferably 70% by mass or more, more preferably 80% by mass or more, more preferably 90% by mass or more, and more preferably 100% by mass.

[Urethane prepolymer having isocyanate group]

Examples of the urethane prepolymer having an isocyanate group include a urethane prepolymer that has a terminal isocyanate group and that is a reaction product derived from a polyol and a polyisocyanate. In the presence of water, the isocyanate group contained in the urethane prepolymer generates a urea bond (-NHCONH-) while generating carbon dioxide to form a crosslinked structure. The urethane prepolymer having an isocyanate group preferably does not contain a hydrolyzable silyl group.
A polyol is a compound having two or more hydroxyl groups within one molecule. Examples of polyols include a polyether polyol, a polyester polyol, a (meth)acrylic polyol, a polybutadiene polyol, and a hydrogenated polybutadiene polyol. Among these, a polyether polyol is preferable. These polyols may be used singly or in combination of two or more types thereof.
Examples of the polyether polyols include a polyoxyalkylene polyol. Examples of the polyoxyalkylene polyols include a polyoxyalkylene diol such as a polyoxyethylene diol (polyethylene glycol) and a polyoxypropylene diol (polypropylene glycol); a polyoxyalkylene triol such as a polyoxyethylene triol and a polyoxypropylene triol; and a polyether polyol obtained by copolymerizing with these. Among these, a polyoxyalkylene triol is preferable, and a polyoxypropylene triol is preferable.
Examples of the polyether polyol include a polyether polyol obtained by copolymerizing two or more types of the above-mentioned polyoxyalkylene polyols. Examples thereof include a polyoxyethylene-polyoxypropylene glycol and a polyoxyethylene-polyoxypropylene triol. These copolymers may be either a block copolymer or a random copolymer. The polyether polyol may be used singly or in combination of two or more types thereof.
The number-average molecular weight of the polyether polyol is preferably 500 to 7,000, more preferably 1,000 to 6,000, more preferably 1,500 to 5,000, and more preferably 2,000 to 4,000. The polyether polyol with the number-average molecular weight falling within the above-mentioned range can provide a curable composition that exhibits high rubber elasticity after curing. The cured product of such a curable composition can maintain excellent rubber elasticity even when heated by heat during a fire or the like after being exposed to moisture such as rainwater.
The number-average molecular weight of the polyether polyol can be measured using a gel permeation chromatography (GPC) method. Specifically, a sample solution is prepared by dissolving a sample in tetrahydrofuran (THF) at a concentration of 1.0% by mass. Using this sample solution, the number-average molecular weight of the polyether polyol is measured by a GPC method using a refractive index detector on the basis of a reference polystyrene.

A polyisocyanate is a compound having two or more isocyanate groups within one molecule. Examples of the polyisocyanates include: an aromatic polyisocyanate such as tolylene diisocyanate (e.g., 2,4-tolylene diisocyanate, 2,6-tolylene diisocyanate, etc.), diphenylmethane diisocyanate (e.g., 4,4'-diphenylmethane diisocyanate, 2,4'-diphenylmethane diisocyanate, etc.), 1,4-phenylene diisocyanate, polymethylene polyphenylene polyisocyanate, xylylene diisocyanate, tetramethylxylylene diisocyanate, tolidine diisocyanate, 1,5-naphthalene diisocyanate, and triphenylmethane triisocyanate; an aliphatic and/or alicyclic polyisocyanate such as hexamethylene diisocyanate, trimethylhexamethylene diisocyanate, lysine diisocyanate, norbornane diisocyanate, transcyclohexane-1,4-diisocyanate, isophorone diisocyanate, bis(isocyanatomethyl)cyclohexane ($H_6XDI$), and dicyclohexylmethane diisocyanate ($H_{12}MDI$); and carbodiimide-modified polyisocyanates, isocyanurate-modified polyisocyanates, and allophanate-modified bodies of these. Among these, an aromatic polyisocyanate is preferable, and tolylene diisocyanate is more preferable. The polyisocyanate may be used singly or in combination of two or more types thereof.

As a method for synthesizing the urethane prepolymer, preferably used method includes heating and melting a polyol 70 to 120°C, dehydrating the resulting melt under reduced pressure, and then adding a polyisocyanate to the melt under a nitrogen atmosphere to react the polyol with the polyisocyanate.

In synthesizing the urethane prepolymer, the molar ratio ([NCO]/[OH]) of the sum of the isocyanate groups (NCO) of the polyisocyanate to the sum of the hydroxyl groups (OH) of the polyol is preferably 1.5 to 4.0. A molar ratio falling within the above-mentioned range can yield a urethane prepolymer with a terminal isocyanate group.

The number-average molecular weight of the urethane prepolymer having an isocyanate group is preferably 10,000 to 50,000, and more preferably 20,000 to 40,000. The urethane prepolymer having a number-average molecular weight falling within the above-mentioned range can provide a curable composition that exhibits high rubber elasticity after curing. The cured product of such a curable composition can maintain excellent rubber elasticity even when heated by heat during a fire or the like after being exposed to moisture such as rainwater.

The number-average molecular weight of the urethane prepolymer having an isocyanate group means a polystyrene-equivalent value measured by a GPC (gel permeation chromatography) method. In the GPC method, a GPC column, for example, Shodex KF800D manufactured by Tosoh Corporation can be used, and chloroform or the like can be used as a solvent.

The content of the urethane prepolymer having an isocyanate group in the curable resin is preferably 50% by mass or more, more preferably 60% by mass or more, more preferably 70% by mass or more, more preferably 80% by mass or more, more preferably 90% by mass or more, and more preferably 100% by mass.

[Dry-curing acrylic polymer]

Examples of the dry-curing acrylic polymer include an acrylic emulsion resin. The acrylic emulsion resin is obtained preferably by emulsion polymerization of raw material monomers containing an acrylic monomer. The acrylic emulsion resin aggregates and cures (solidifies) by evaporation of a solvent such as water. The dry-curing acrylic polymer preferably does not contain a hydrolyzable silyl group. The acrylic emulsion resin preferably does not contain a hydrolyzable silyl group.

The acrylic emulsion resin is a polymer of raw material monomers containing an acrylic monomer. Examples of acrylic monomers include an alkyl (meth)acrylate such as methyl (meth)acrylate, ethyl (meth)acrylate, propyl (meth)acrylate, butyl (meth)acrylate, pentyl (meth)acrylate, hexyl (meth)acrylate, 2-ethylhexyl (meth)acrylate, octyl (meth)acrylate, nonyl (meth)acrylate, cyclohexyl (meth)acrylate, and butylcyclohexyl (meth)acrylate; an acrylic monomer having a carboxyl group such as acrylic acid, methacrylic acid, β-carboxyethyl (meth)acrylate, 2-(meth)acryloylpropionic acid, crotonic acid, itaconic acid, maleic acid, fumaric acid, itaconic acid half ester, maleic acid half ester, maleic anhydride, and itaconic anhydride; an acrylic monomer having a glycidyl group such as glycidyl (meth)acrylate and allyl glycidyl ether; an acrylic monomer having a hydroxyl group such as 4-hydroxybutyl (meth)acrylate, 2-hydroxybutyl (meth)acrylate, 2-hydroxypropyl (meth)acrylate, 2-hydroxyhexyl (meth)acrylate, 6-hydroxyhexyl (meth)acrylate, 1,4-cyclohexanedimethanol mono(meth)acrylate, 8-hydroxyoctyl (meth)acrylate, 10-hydroxydecyl (meth)acrylate, and 12-hydroxylauryl (meth)acrylate; and ethylene glycol di(meth)acrylate, 1,6-hexanediol di(meth)acrylate, neopentyl glycol di(meth)acrylate, trimethylolpropane tri(meth)acrylate, polyethylene glycol di(meth)acrylate, polypropylene glycol di(meth)acrylate, diallyl phthalate, divinylbenzene, and allyl (meth)acrylate. The acrylic monomer may be used singly or in combination of two or more types thereof f.

Examples of the preferable acrylic monomer includes an alkyl (meth)acrylate, an acrylic monomer having a carboxyl group, and an acrylic monomer having a glycidyl group. Examples of the more preferable acrylic monomer include butyl (meth)acrylate, 2-ethylhexyl (meth)acrylate, acrylic acid, and glycidyl (meth)acrylate.

The content of the alkyl (meth)acrylate component in the acrylic emulsion resin is preferably 30% by mass or more, more preferably 50% by mass or more, more preferably 80% by mass or more, more preferably 84% by mass or more, and more preferably 89.5% by mass or more. The content of the alkyl (meth)acrylate component in the acrylic emulsion resin is preferably 98.89% by mass or less, more preferably 98% by mass or less, more preferably 96.45% by

mass or less, and more preferably 95% by mass or less. The alkyl (meth)acrylate component, when contained within the above-described range, allows the cured product of the curable composition to maintain excellent rubber elasticity even when heated to about 400°C.

The content of the acrylic monomer component having a carboxyl group in the acrylic emulsion resin is preferably 0.1% by mass or more, and more preferably 0.5% by mass or more. The content of the acrylic monomer component having a carboxyl group in the acrylic emulsion resin is preferably 5% by mass or less, and more preferably 3% by mass or less.

The content of the acrylic monomer component having a glycidyl group in the acrylic emulsion resin is preferably 0.01% by mass or more, and more preferably 0.05% by mass or more. The content of the acrylic monomer component having a glycidyl group in the acrylic emulsion resin is preferably 1% by mass or less, and more preferably 0.5% by mass or less.

In addition, the raw material monomers may contain monomers other than the acrylic monomer described above. Examples of the other monomers include methacrylonitrile, acrylonitrile, styrene, p-chlorostyrene, vinylnaphthalene, vinyl chloride, vinyl bromide, vinyl fluoride, vinyl acetate, vinyl propionate, vinyl benzoate, vinyl butyrate, vinyl methyl ether, vinyl isobutyl ether, vinyl methyl ketone, vinyl ethyl ketone, methyl isopropenyl ketone, N-vinylpyrrole, N-vinylcarbazole, N-vinylindole, and N-vinylpyrrolidene. Among these, acrylonitrile is preferable. These other monomers may be used singly or in combination of two or more types thereof.

The content of the acrylonitrile component in the acrylic emulsion resin is preferably 1% by mass or more, and more preferably 3% by mass or more. The content of the acrylonitrile component in the acrylic emulsion resin is preferably 10% by mass or less, and more preferably 7% by mass or less. The acrylonitrile component, when contained within the above-described range, allows the cured product of the curable composition to maintain excellent rubber elasticity even when heated to about 400°C.

The weight-average molecular weight of the acrylic emulsion resin is preferably 10,000 or more, more preferably 50,000 or more, and more preferably 100,000 or more. The weight-average molecular weight of the acrylic emulsion resin is preferably 1,000,000 or less, more preferably 800,000 or less, more preferably 700,000 or less, more preferably 500,000 or less, and more preferably 400,000 or less. The acrylic emulsion resin having a weight-average molecular weight of 10,000 or more can allow the cured product of the curable composition to maintain excellent rubber elasticity even when heated by heat during a fire or the like after being exposed to moisture such as rainwater. The acrylic emulsion resin having a weight-average molecular weight of 1,000,000 or less allows the cured product of the curable composition to maintain excellent rubber elasticity even when heated to about 400°C.

The weight-average molecular weight of the acrylic emulsion resin means a polystyrene-equivalent value measured by a GPC (gel permeation chromatography) method. In the GPC method, a GPC column, for example, Shodex KF800D manufactured by Tosoh Corporation can be used, and chloroform or the like can be used as a solvent.

The glass transition temperature of the acrylic emulsion resin is preferably -80°C or higher, more preferably -75°C or higher, and more preferably -70°C or higher. The glass transition temperature of the acrylic emulsion resin is preferably -20°C or lower, more preferably -30°C or lower, more preferably -35°C or lower, and more preferably -50°C or lower. The acrylic emulsion resin having a glass transition temperature of -80°C or higher can allow the cured product of the curable composition to maintain excellent rubber elasticity even when heated by heat during a fire or the like after being exposed to moisture such as rainwater. The acrylic emulsion resin having a glass transition temperature of -20°C or lower allows the cured product of the curable composition to maintain excellent rubber elasticity even when heated to about 400°C.

The glass transition temperature [°C] of the acrylic emulsion resin can be calculated from the Fox (FOX) equation of the following formula (1) using the content ratio (mass fraction) of each monomer constituting the acrylic emulsion resin and the glass transition temperature of the homopolymer of each monomer. For example, first, a glass transition temperature at the absolute temperature [K (Kelvin)] is calculated on the basis of the following equation (1). Next, the glass transition temperature [°C] of the acrylic emulsion resin is defined as the value obtained by subtracting "273" from the calculated glass transition temperature [K].

[Mathematical formula 1]

$$1/\mathrm{Tg} = \sum_{\mathrm{i}=1}^{\mathrm{n}} (\mathrm{Wi}/\mathrm{Tgi}) \qquad (1)$$

(In the equation (1), Tg is the glass transition temperature (K) of the acrylic emulsion resin, Wi is the content ratio (mass fraction) of an i-th monomer, Tgi is the glass transition temperature (K) of the homopolymer of the i-th monomer, and n is an integer representing the number of types of monomers.)

The "glass transition temperature of the homopolymer of the monomer" is defined as the glass transition temperature of the homopolymer obtained by homopolymerization of the monomer. As glass transition temperatures of

homopolymers of monomers, values from sources such as "Polymer Handbook Fourth Edition" (POLYMER HANDBOOK Fourth Edition, John Wiley & Sons, Inc., 1999) and similar references may be adopted.

The acrylic emulsion resin is preferably in particulate form. The acrylic emulsion resin in particulate form can promote the aggregation and curing (solidification) of the acrylic emulsion resin.

When the curable composition contains the acrylic emulsion resin, the curable composition preferably further contains an aqueous solvent containing water. Accordingly, the acrylic emulsion resin can be dispersed in an aqueous solvent containing water, and by evaporating the aqueous solvent in such a state, the aggregation and curing (solidification) of the acrylic emulsion resin can be promoted.

The aqueous solvent is not particularly limited, and examples thereof include water and a mixed solvent of water and a water-soluble organic solvent (lower alcohol such as methanol or ethanol (alcohol having 5 or less carbon atoms)). Among these, water is preferable. The aqueous solvent may be used singly or in combination of two or more types thereof.

The content of the aqueous solvent in the curable composition is preferably 40 parts by mass or more, more preferably 45 parts by mass or more, and more preferably 50 parts by mass or more, relative to 100 parts by mass of the acrylic emulsion resin. The content of the aqueous solvent in the curable composition is preferably 100 parts by mass or less, more preferably 90 parts by mass or less, and more preferably 80 parts by mass or less, relative to 100 parts by mass of the acrylic emulsion resin. The aqueous solvent, when contained within the above-described range, promotes the aggregation and curing (solidification) of the acrylic emulsion resin by evaporation of the aqueous solvent.

The acrylic emulsion resin is preferably obtained through emulsion polymerization. In the emulsion polymerization, for example, raw material monomers that include an acrylic monomer are subjected to emulsion polymerization in an aqueous solvent containing water to obtain the acrylic emulsion resin. Emulsion polymerization yields the acrylic emulsion composition including the acrylic emulsion resin and the aqueous solvent containing water. In the acrylic emulsion composition, the acrylic emulsion resin is contained while dispersed in the aqueous solvent containing water.

The curable composition, which includes the acrylic emulsion resin, is preferably produced by mixing the acrylic emulsion composition including the acrylic emulsion resin and an aqueous solvent containing water, a poorly water-soluble phosphorus-based compound, and other additives added as necessary.

The curable composition, which includes an acrylic emulsion resin, may further include additives commonly used in acrylic emulsion compositions. Examples of the additives include a preservative and antifungal agent, an anti-foaming agent, a wetting agent, a dryness adjusting agent, an antifreezing agent, a rust inhibitor, an antioxidant, an ultraviolet absorber, an oxygen absorber, and a light stabilizer. The additives may be used singly or in combination of two or more types thereof. The order of addition of the above-mentioned additives is not particularly limited. Examples thereof include a method of obtaining a curable composition by mixing the acrylic emulsion composition and the poorly water-soluble phosphorus-based compound after adding the additives to the acrylic emulsion composition, and a method of obtaining a curable composition by mixing the acrylic emulsion composition, the poorly water-soluble phosphorus-based compound, and the additives.

The acrylic emulsion resin can be produced using a known emulsion polymerization method. For example, a method in which raw material monomers that contains an acrylic monomer are emulsion-polymerized in the aqueous solvent containing water in the presence of a polymerization initiator and, as necessary, a surfactant to obtain the acrylic emulsion resin is used. From the above-described method, the acrylic emulsion composition in which the acrylic emulsion resin is dispersed in the aqueous solvent containing water is obtained.

The raw material monomers and the polymerization initiator may each be fed to the reaction system all at once, or each may be continuously or intermittently added dropwise. An example method for producing the acrylic emulsion resin, for example, is a method involving continuously or intermittently adding, dropwise, an emulsion containing a surfactant, an aqueous solvent, and raw material monomers containing an acrylic monomer into an aqueous solvent, thereby allowing the raw material monomers to undergo emulsion polymerization.

The emulsion can be prepared by a known method. For example, an emulsion can be obtained by adding raw material monomers and a surfactant to an aqueous solvent and dispersing the mixture by a microemulsifier such as a homogenizer, an ultrasonic processor, or a nanomizer.

A polymerization initiator may be included in the emulsion or may be included in an aqueous solvent to which the emulsion is dropped. Examples of the polymerization initiator include persulfates such as potassium persulfate, ammonium persulfate, and sodium persulfate; organic peroxides such as benzoyl peroxide, lauroyl peroxide, o-chlorobenzoyl peroxide, o-methoxybenzoyl peroxide, 3,5,5-trimethylhexanoyl peroxide, tert-butyl peroxy-2-ethylhexanoate, and di-tert-butyl peroxide; and azo-based compounds such as 2,2'-azobisisobutyronitrile, 1,1'-azobiscyclohexane carbonitrile, and 2,2'-azobis(2,4-dimethylvaleronitrile). The polymerization initiator may be used singly or in combination of two or more types thereof. The polymerization initiator is preferably used in an amount of 0.01 to 5 parts by mass, more preferably 0.05 to 1 parts by mass, relative to 100 parts by mass of the raw material monomers.

As the surfactant, any of a nonionic surfactant, an anionic surfactant, a cationic surfactant, and an amphoteric surfactant can be used. The surfactant may be used singly or in combination of two or more types thereof.

Examples of the nonionic surfactant include a polyoxyethylene nonylphenyl ether, a polyoxyethylene lauryl ether,

a polyoxyethylene styrenated phenyl ether, and a polyoxyethylene sorbitol tetraoleate.

Examples of the anionic surfactant include sodium oleate; a fatty acid oil such as castor oil potassium; an alkyl sulfuric acid salt such as sodium lauryl sulfate and ammonium lauryl sulfate; an alkyl benzene sulfonic acid salt such as sodium dodecylbenzene sulfonate; an alkyl naphthalene sulfonic acid salt; an alkane sulfonic acid salt; a dialkyl sulfosuccinic acid salt such as sodium dioctyl sulfosuccinate; an alkenyl succinic acid salt (dipotassium salt); an alkyl phosphate ester salt; a naphthalene sulfonic acid formalin condensate; a polyoxyethylene alkyl ether sulfuric acid salt such as a polyoxyethylene alkyl phenyl ether sulfuric acid salt and sodium polyoxyethylene lauryl ether sulfate; and a polyoxyethylene alkyl sulfuric acid ester salt.

Examples of the cationic surfactant include an alkyl amine salt such as lauryl amine acetate and stearyl amine acetate; and a quaternary ammonium salt such as lauryl trimethylammonium chloride.

Examples of the amphoteric surfactant include lauryl dimethylamine oxide, a phosphoric acid ester-based surfactant, and a phosphorous acid ester-based surfactant.

The polymerization temperature of the emulsion polymerization is preferably 50 to 100°C, and more preferably 65 to 85°C. The polymerization time of the emulsion polymerization is preferably 1 to 12 hours. The polymerization reaction of the emulsion polymerization may be carried out under an atmosphere of an inert gas (for example, nitrogen gas) that is inert to the polymerization. After completion of the emulsion polymerization, ammonia or an amine such as triethylamine or dimethylethanolamine; or a base such as NaOH, KOH, or the like may be added to neutralize the system, as necessary.

The content of the acrylic emulsion resin in the curable resin is preferably 50% by mass or more, more preferably 60% by mass or more, more preferably 70% by mass%, more preferably 80% by mass, more preferably 90% by mass, and more preferably 100% by mass.

[Photo-crosslinkable polymer]

The photo-crosslinkable polymer has a photo-crosslinkable group in the molecule, and forms a chemical bond between the molecules by irradiation of light such as ultraviolet rays, thereby forming a crosslinked structure and curing.

Any photo-crosslinkable group may be used as long as a chemical bond can be formed by light irradiation. Photo-crosslinkable groups are not particularly limited, and examples thereof include a thiol group, a glycidyl group, an oxetanyl group, a vinyl group, a (meth)acryloyl group, a benzophenone group, a benzoin group, and a thioxanthone group. Among these, benzophenone, benzoin, and thioxanthone groups are preferable, with benzophenone being more preferable. The (meth)acryloyl means methacryloyl or acryloyl.

The main chain structure of the photo-crosslinkable polymer is not particularly limited, and examples thereof include a polyolefin-based resin, an acrylic resin, an epoxy-based resin, and a cyanoacrylate-based resin. Examples of a method of introducing a photo-crosslinkable group into the main chain include a method of polymerizing a monomer composition containing a photo-crosslinkable group-containing monomer.

The photo-crosslinkable group-containing monomer is not particularly limited, and examples thereof include glycidyl(meth)acrylate, 4-hydroxybutylacrylate glycidyl ether, 4-(meth)acryloyloxybenzophenone, 4-[2-(meth)acryloyloxy)ethoxy]benzophenone, 4-(meth)acryloyloxy-4'-methoxybenzophenone, 4-(meth)acryloyloxyethoxy-4'-methoxybenzophenone , 4-(meth)acryloyloxy-4'-bromobenzophenone, and 4-(meth)acryloyloxyethoxy-4'-bromobenzophenone. 4-(meth)acryloyloxybenzophenone and 4-[2-(meth)acryloyloxy)ethoxy]benzophenone are preferable. UV-crosslinkable group-containing monomers (D) may be used singly or in combination of two or more types thereof. The (meth)acryloyloxy means methacryloyloxy or acryloyloxy.

The content of the photo-crosslinkable polymer in the curable resin is preferably 50% by mass or more, more preferably 60% by mass or more, more preferably 70% by mass or more, more preferably 80% by mass or more, more preferably 90% by mass or more, and more preferably 100% by mass.

[Two-component curable resin]

The two-component curable resin is not particularly limited, and examples thereof include an isocyanate-based polymer and a glycidyl-based polymer.

The isocyanate-based polymer is a two-component curable resin composed of a main agent containing a polyisocyanate and a curing agent containing a polyol. The main agent and the curing agent are mixed to react the polyisocyanate and the polyol to form a urethane bond, thereby achieving crosslinking and curing.

Examples of the polyisocyanate include an aromatic aliphatic diisocyanate, an aliphatic diisocyanate, and an alicyclic diisocyanate. Examples of the aromatic aliphatic diisocyanate include diphenylmethane diisocyanate, 1,3-xylylene diisocyanate, 1,4-xylylene diisocyanate, 1,3-bis(1-isocyanato-1-methylethyl)benzene, 1,4-bis(1-isocyanato-1-methylethyl) benzene, ω,ω'-diisocyanato-1,4-diethylbenzene, and a urethane prepolymer having isocyanate groups at both ends.

Examples of the aliphatic diisocyanate include hexamethylene diisocyanate, tetramethylene diisocyanate, 2-methyl-pentane-1,5-diisocyanate, 3-methyl-pentane-1,5-diisocyanate, lysine diisocyanate, and trioxyethylene diisocyanate.

Examples of the alicyclic diisocyanate include isophorone diisocyanate, cyclohexyl diisocyanate, hydrogenated diphenylmethane diisocyanate, norbornane diisocyanate, hydrogenated tolylene diisocyanate, hydrogenated xylene diisocyanate, and hydrogenated tetramethylxylene diisocyanate.

Examples of the polyol include a polyurethane polyol, a polyester polyol, a polyether polyol, an acrylic polyol, a polyolefin polyol, and a castor oil-based polyol.

The glycidyl-based polymer is a two-component curable resin composed of a curing agent and a main agent containing an epoxy resin. The epoxy resin is not particularly limited, and examples thereof include a bisphenol A type epoxy resin obtained by reacting bisphenol A with epichlorohydrin, a bisphenol F type epoxy resin obtained by reacting bisphenol F with epichlorohydrin, and hydrogenated products of these, a glycidyl ester type epoxy resin, a novolac type epoxy resin, a urethane-modified epoxy resin, a nitrogen-containing epoxy resin such as triglycidyl isocyanurate, and a rubber-modified epoxy resin including polybutadiene or NBR.

The curing agent is not particularly limited, and examples thereof include an amine-based curing agent, an acid anhydride-based curing agent, a polyamide-based curing agent, an imidazole-based curing agent, and a polymercaplane-based curing agent.

Examples of the amine-based curing agent include an aliphatic polyamine such as polyoxypropylenetriamine, diethylenetriamine, and triethylenetetramine, and an aromatic polyamine such as metaphenylenediamine, diaminodiphenylmethane, diaminodiphenylsulfone, and 2,4,6-tris(dimethylaminomethyl)phenol.

Examples of the acid anhydride-based curing agent include tetrahydrophthalic anhydride, hexahydrophthalic anhydride, methyltetrahydrophthalic anhydride, methylnadic anhydride, pyromellitic anhydride, hettic anhydride, and dodecenyl succinic anhydride. Examples of the polyamide-based curing agent include dimer acid.

The content of the two-component curable resin in the curable resin is preferably 50% by mass or more, more preferably 60% by mass or more, more preferably 70% by mass or more, more preferably 80% by mass or more, more preferably 90% by mass or more, and more preferably 100% by mass.

[Poorly water-soluble phosphorus-based compound]

The curable composition includes a poorly water-soluble phosphorus-based compound. The poorly water-soluble phosphorus-based compound is not particularly limited, and examples thereof include a poorly water-soluble inorganic phosphorus-based compound such as aluminum phosphite, monobasic aluminum phosphate, aluminum phosphate dibasic, aluminum phosphate tribasic, aluminum metaphosphate, and a condensed aluminum phosphate, and a poorly water-soluble organic phosphorus-based compound such as melam polyphosphate, melamine polyphosphate, and melamine polyphosphate. The poorly water-soluble phosphorus-based compound includes preferably a poorly water-soluble inorganic phosphorus-based compound, more preferably aluminum phosphite or ammonium phosphate, even more preferably aluminum phosphite. The poorly water-soluble phosphorus-based compound may be used singly or in combination of two or more types thereof.

The term "poorly water-soluble phosphorus-based compound" refers to a phosphorus-based compound whose saturated concentration (solubility) in a saturated solution prepared by dissolving the phosphorus-based compound in 100 g of water at 25°C is 0.03 g/100 g-$H_2O$ or less. Specifically, an excess amount of the phosphorus-based compound is added to 1,000 g of water at 25°C but only to the extent that a slight amount of precipitate is generated, and the resulting mixture is stirred to dissolve the phosphorus-based compound, thereby producing a solution. The solution is filtered under suction using class No. 5C filter paper conforming to JIS P 3801 to remove undissolved matter in the solution, thereby producing a saturated solution. The saturated solution is heated to 100°C to evaporate water in the saturated solution, thereby obtaining a phosphorus-based compound precipitate. The mass of this precipitate is measured, and a value of 1/10 of the mass of this precipitate is taken as the solubility (g/100g-$H_2O$). Note that, some of the water content is absorbed by the filter paper during the undissolved matter removal process. However, since this content is an extremely small amount compared to 1,000 g of water, the mass of water absorbed by the filter paper does not affect the solubility value and can be ignored.

The cured product of the curable composition is, for example, filled into the sealing section of the building structure. The panel member constituting the wall may shrink due to the heat of a fire. In such a case, the sealing section expands and undergoes dimensional changes.

When the curable composition includes the poorly water-soluble phosphorus-based compound, the cured product of the curable composition can exhibit excellent rubber elasticity even when heated to about 400°C, form a strong combustion residue after being burnt, reliably maintain the filling state of the sealing section by smoothly following the dimensional changes in the sealing section caused by the heat of a fire, prevent flames from penetrating through the sealing section, and can thus impart excellent fire resistance to the building structure.

Further, the cured product of the curable composition including the poorly water-soluble phosphorus-based

compound can maintain excellent rubber elasticity even when heated to 400°C by the heat during a fire or the like after being exposed to moisture such as rainwater. In addition, the combustion residue generated by combustion is hard, allowing the cured product to smoothly follow the dimensional changes in the sealing section and reliably maintain the filling state of the sealing section. Thus, the cured product can impart excellent fire resistance to the building structure.

Further, the curable composition including the poorly water-soluble phosphorus-based compound does not undergo discoloration such as whitening even when repeatedly exposed to moisture such as rainwater for an extended period of time, and can maintain a beautiful appearance for an extended period of time.

Further, when the curable composition includes the poorly water-soluble phosphorus-based compound and the polymer having a hydrolyzable silyl group (preferably the polyalkylene oxide having a hydrolyzable silyl group), the poorly water-soluble phosphorus-based compound maintains excellent rubber elasticity even when heated to about 400°C by the heat of a fire as described above, while the crosslinked structure formed by the polymer having a hydrolyzable silyl group is decomposed and cleaved by the heat during combustion to generate a decomposition residue. This decomposition residue is taken into a combustion residue of the poorly water-soluble phosphorus-based compound to form a strong combustion residue, and this resulting combustion residue reliably maintains the filling state of the sealing section.

The content of the poorly water-soluble phosphorus-based compound in the curable composition is 10 parts by mass or more, preferably 20 parts by mass or more, and more preferably 30 parts by mass or more, relative to 100 parts by mass of the curable resin. The content of the poorly water-soluble phosphorus-based compound in the curable composition is 150 parts by mass or less, preferably 120 parts by mass or less, and more preferably 100 parts by mass or less, relative to 100 parts by mass of the curable resin. The poorly water-soluble phosphorus-based compound, when contained in the curable composition within the above-mentioned range, allows the cured product of the curable composition to maintain excellent rubber elasticity and smoothly follow the dimensional changes in the sealing section of the building structure even when heated to about 400°C by the heat of a fire, thereby reliably maintaining the closing of the sealing section.

[Calcium carbonate]

The curable composition preferably includes calcium carbonate. The calcium carbonate is not particularly limited, and examples thereof include colloidal calcium carbonate, heavy calcium carbonate, and light calcium carbonate. Colloidal calcium carbonate and heavy calcium carbonate are preferable. Colloidal calcium carbonate is more preferable. It is more preferable that calcium carbonate include colloidal calcium carbonate and heavy calcium carbonate.

The average particle diameter of the calcium carbonate is preferably 0.01 to 5 mm, more preferably 0.05 to 2.5 mm. The calcium carbonate having such an average particle diameter allows the combustion residue of the cured product of the curable composition to have excellent strength. Thus, the combustion residue does not become too hard and crack. Thus, the filling state of the sealing section such as a joint section can be reliably maintained, and the excellent fire resistance can be imparted to the panel structure of the building structure. Note that the average particle diameter of the calcium carbonate is a value calculated by the arithmetic average of the particle diameters of 10 particles measured on a scale by SEM observation. The particle diameter is defined as a diameter of the smallest true circle that can surround the particle in a micrograph taken with a SEM (scanning electron microscope).

Further, the calcium carbonate is preferably surface-treated with a fatty acid, a fatty acid ester, or the like. The calcium carbonate surface-treated with a fatty acid, a fatty acid ester, or the like can impart thixotropy to the curable composition and prevent aggregation of the calcium carbonate.

The content of the calcium carbonate in the curable composition is 50 parts by mass or more, preferably 70 parts by mass or more, more preferably 100 parts by mass or more, and more preferably 120 parts by mass or more, relative to 100 parts by mass of the curable resin. The content of the calcium carbonate in the curable composition is 300 parts by mass or less, preferably 250 parts by mass or less, more preferably 200 parts by mass or less, and more preferably 160 parts by mass or less, relative to 100 parts by mass of the curable resin. The calcium carbonate, when contained in the curable composition in an amount of 50 parts by mass or more, exerts a reinforcing effect of the curable resin that is softened by the heat of a fire and enhances the shape retention of the cured product of the curable composition. The calcium carbonate, when contained in the curable composition in an amount of 300 parts by mass or less, can allow the cured product of the curable composition to maintain excellent rubber elasticity even when heated to about 400°C, to smoothly follow the dimensional changes in the sealing section caused by the heat of a fire, and to stably maintain the filling state of the sealing section.

[Silanol condensation catalyst]

The curable composition preferably contains a silanol condensation catalyst. When the curable composition includes a polymer having a hydrolyzable silyl group, the curable composition preferably further includes a silanol condensation catalyst. The silanol condensation catalyst is a catalyst for promoting a dehydration condensation reaction

between silanol groups formed by hydrolysis of hydrolyzable silyl groups of a polymer having a hydrolyzable silyl group.

Examples of the silanol condensation catalyst include an organic tin compound such as 1,1,3,3-tetrabutyl-1,3-dilauryloxycarbonyl-distannoxane, dibutyltin dilaurate, dibutyltin oxide, dibutyltin diacetate, dibutyltin phthalate, bis(dibutyltin laurate)oxide, dibutyltin bis(acetylacetonato), dibutyltin bis(monoester maleate), tin octoate, dibutyltin octoate, dioctyltin oxide, dibutyltin bis(triethoxysilicate), bis(dibutyltin bistriethoxysilicate)oxide, and dibutyltin oxybisethoxysilicate; and an organic titanium compound such as tetra-n-butoxytitanate and tetraisopropoxytitanate. These silanol condensation catalysts may be used singly or in combination of two or more types thereof.

As the silanol condensation catalyst, an organotin compound is preferable, and 1,1,3,3-tetrabutyl-1,3-dilauryloxycarbonyl-distanoxane and dibutyltin diacetate are preferable. Such a silanol condensation catalyst can allow for adjustment of the curing rate of the curable composition to be easier.

The content of the silanol condensation catalyst in the curable composition is preferably 0.001 parts by mass or more, more preferably 0.01 parts by mass or more, more preferably 0.1 parts by mass or more, more preferably 0.2 parts by mass or more, and more preferably 0.3 parts by mass or more, relative to 100 parts by mass of the polymer having a hydrolyzable silyl group. The content of the silanol condensation catalyst in the curable composition is preferably 10 parts by mass or less, more preferably 8 parts by mass or less, more preferably 6 parts by mass or less, and more preferably 5 parts by mass or less, relative to 100 parts by mass of the polymer having a hydrolyzable silyl group. The silanol condensation catalyst, when contained in the curable composition in an amount of 0.001 parts by mass or more, can increase the curing rate of the curable composition, thereby shortening the time required for curing the curable composition. The silanol condensation catalyst, when contained in the curable composition in an amount of 10 parts by mass or less, allows the curable composition to have an appropriate curing rate, and can enhance the storage stability and handleability of the curable composition.

[Curing catalyst]

When the curable composition includes a urethane prepolymer having an isocyanate group, the curable composition preferably further includes a curing catalyst. The curing catalyst is a catalyst for promoting a reaction in which the isocyanate group of the urethane prepolymer generates a urea bond in the presence of water to form a crosslinked structure.

As the curing catalyst, a tin-based curing catalyst, an amine-based curing catalyst, and the like are used. Examples of the tin-based curing catalyst include stannous acid, dibutyltin dilaurate, dibutyltin dioctate, dibutyltin diacetate, dioctyltin dilaurate, dioctyltin dioctate, dioctyltin diacetate, and stannous dioctanoate. The amine-based curing catalyst is preferably a morpholine-based compound. Specific examples of morpholine-based compounds include 2,2'-dimorpholino diethyl ether, bis(2,6-dimethylmorpholinoethyl) ether, bis(2-(2,6-dimethyl-4-morpholino)ethyl)-(2-(4-morpholino)ethyl)amine, bis(2-(2,6-dimethyl-4-morpholino)ethyl)- (2-(2,6-diethyl-4-morpholino)ethyl)amine, tris(2-(4-morpholino)ethyl)amine, tris(2-(4-morpholino)propyl)amine, tris(2-(4-morpholino)butyl)amine, tris(2-(2,6-dimethyl-4-morpholino)ethyl)amine, tris(2-(2,6-diethyl-4-morpholino)ethyl)amine, tris(2-(2-ethyl-4-morpholino)ethyl)amine, and tris(2-(2-ethyl-4-morpholino) ethylamine. Among these, a tin-based curing catalyst is preferable, and dibutyltin diacetate is more preferable. The curing catalyst may be used singly or in combination of two or more types thereof.

The content of the curing catalyst in the curable composition is preferably 0.001 parts by mass or more, more preferably 0.01 parts by mass or more, more preferably 0.1 parts by mass or more, more preferably 0.2 parts by mass or more, and more preferably 0.3 parts by mass or more, relative to 100 parts by mass of the urethane prepolymer having an isocyanate group. The content of the curing catalyst in the curable composition is preferably 5 parts by mass or less, more preferably 1 part by mass or less, and more preferably 0.1 parts by mass or less, relative to 100 parts by mass of the urethane prepolymer having an isocyanate group.

[Glass frit]

The curable composition does not necessarily include glass frit. The glass frit acts as a binder for binding the curable resin and/or the poorly water-soluble phosphorus-based compound together in the combustion residue of the cured product of the curable composition.

On the other hand, when the poorly water-soluble phosphorus-based compound is included in the curable composition, the combustion residue of the poorly water-soluble phosphorus-based compound effectively incorporates the decomposition residue of the curable resin to form strong combustion residue, making a binder component unnecessary.

Since the curable composition does not include glass frit, the cured product of the curable composition does not become too hard. This can reduce the formation of breaking points in the sealing section constituent member caused by an increase in the difference in hardness between the sealing section constituent member that becomes brittle due to the heat of a fire and the cured product of the curable composition, thereby stably maintaining the shape of the sealing section

constituent member during a fire.

Examples of glass constituting glass frit include a phosphoric acid-based glass, a boric acid-based glass, a bismuth oxide-based glass, a silicic acid-based glass, and a sodium oxide-based glass. A phosphoric acid-based glass and a boric acid-based glass are preferable, and a phosphoric acid-based glass is more preferable. These glass frits can be obtained by adjusting $B_2O_3$, $P_2O_5$, ZnO, $SiO_2$, $Bi_2O_3$, $Al_2O_3$, BaO, CaO, MgO, $MnO_2$, $ZrO_2$, $TiO_2$, $CeO_2$, SrO, $V_2O_5$, $SnO_2$, $Li_2O$, $Na_2O$, $K_2O$, CuO, $Fe_2O_3$ or the like at a predetermined component ratio.

[Plasticizer]

The curable composition preferably contains a plasticizer. Examples of the plasticizer include a phthalic acid ester such as dimethyl phthalate, diethyl phthalate, dibutyl phthalate, diisobutyl phthalate, dihexyl phthalate, bis(2-ethylhexyl) phthalate, dioctyl phthalate, diisononyl phthalate, dinonyl phthalate, diisodecyl phthalate, diisoundecyl phthalate, and bisbutylbenzyl phthalate; a polyalkylene glycol such as diethylene glycol, triethylene glycol, tetraethylene glycol, dipropylene glycol, tripropylene glycol, tetrapropylene glycol, and polypropylene glycol; and tricresyl phosphate. Among these, polyalkylene glycol is preferable, and polypropylene glycol is more preferable. The plasticizer is preferably a phthalic acid ester, and more preferably dioctyl phthalate. The plasticizer is preferably liquid at 23°C and $1.01 \times 10^5$ Pa (1 atm).

When the plasticizer is a polymer, the number-average molecular weight of the plasticizer is preferably 1,000 or more, and more preferably 2,000 or more. When the plasticizer is a polymer, the number-average molecular weight of the plasticizer is preferably 10,000 or less, more preferably 5,000 or less, and more preferably less than 3,000. The plasticizer having a number-average molecular weight falling within the above-mentioned range allows the cured product of the curable composition to maintain excellent rubber elasticity even when heated to about 400°C, and also can allow the combustion residue of the cured product of the curable composition to be stably held in the sealing portion.

In the present invention, when the plasticizer is a polymer, the number-average molecular weight of the plasticizer is measured as a polystyrene-equivalent value by a GPC (gel permeation chromatography) method. The specific measurement method and measurement conditions are the same as those described above for the polyalkylene oxide.

The content of the plasticizer in the curable composition is preferably 1 part by mass or more, and more preferably 10 parts by mass or more, relative to 100 parts by mass of the curable resin. The content of the plasticizer in the curable composition is preferably 50 parts by mass or less, and more preferably 40 parts by mass or less, relative to 100 parts by mass of the curable resin.

[Dehydrating agent]

The curable composition preferably further contains a dehydrating agent. The dehydrating agent can suppress the curable composition from being cured by moisture contained in air or the like during the storage of the curable composition.

Examples of the dehydrating agent include a silane compound such as vinyltrimethoxysilane, dimethyldimethoxysilane, tetraethoxysilane, methyltrimethoxysilane, methyltriethoxysilane, tetramethoxysilane, phenyltrimethoxysilane, and diphenyldimethoxysilane; and an ester compound such as methyl orthoformate, ethyl orthoformate, methyl orthoacetate, and ethyl orthoacetate. These dehydrating agents may be used singly or in combination of two or more types thereof. Among these, vinyltrimethoxysilane is preferable.

The content of the dehydrating agent in the curable composition is preferably 0.5 parts by mass or more, and more preferably 1 part by mass or more, relative to 100 parts by mass of the curable resin. The content of the dehydrating agent in the curable composition is preferably 20 parts by mass or less, and more preferably 15 parts by mass or less, relative to 100 parts by mass of the curable resin. The dehydrating agent, when contained in the curable composition in an amount of 0.5 parts by mass or more, can exert its effect sufficiently. The dehydrating agent, when contained in the curable composition in an amount of 20 parts by mass or less, can impart excellent curability to the curable composition.

[Other additives]

The curable composition may include other additives such as a thixotropy imparting agent, an antioxidant, an ultraviolet absorber, a pigment, a dye, an anti-settling agent, an amino silane coupling agent, an epoxy silane coupling agent, a thixotropic agent, and a solvent. Among these, a thixotropy imparting agent, an ultraviolet absorber, and an antioxidant are preferable.

The curable composition preferably contains an amino silane coupling agent. Using the amino silane coupling agent can enhance rubber elasticity and adhesiveness of the cured product of the curable composition. The amino silane coupling agent means a compound containing a silicon atom to which an alkoxy group is bonded and a functional group

containing a nitrogen atom within one molecule.

Specific examples of the amino silane coupling agent include 3-aminopropyltrimethoxysilane, 3-aminopropylmethyldimethoxysilane, 3-aminopropyltriethoxysilane, N-(2-aminoethyl)-3-aminopropyltrimethoxysilane, N-(2-aminoethyl)-3-aminopropyltriethoxysilane, N,N'-bis-[3-(trimethoxysilyl)propyl]ethylenediamine, N,N'-bis-[3-(triethoxysilyl)propyl]ethylenediamine, N,N'-bis-[3-(methyldimethoxysilyl)propyl]ethylenediamine, N,N'-bis-[3-(trimethoxysilyl)propyl]hexamethylenediamine, and N,N'-bis-[3-(triethoxysilyl)propyl]hexamethylenediamine. These amino silane coupling agents may be used singly or in combination of two or more types thereof.

Among these, preferred examples of the amino silane coupling agent include 3-aminopropyltrimethoxysilane, N-(2-aminoethyl)-3-aminopropyltrimethoxysilane, and N-(2-aminoethyl)-3-aminopropyltriethoxysilane, and more preferred example is N-(2-aminoethyl)-3-aminopropyltrimethoxysilane.

The content of the amino silane coupling agent in the curable composition is preferably 1 to 10 parts by mass, and more preferably 1 to 5 parts by mass, relative to 100 parts by mass of the curable resin. The amino silane coupling agent, when contained within the above-described range, can enhance the rubber elasticity and adhesiveness of the cured product of the curable composition.

The curable composition preferably contains an epoxy silane coupling agent. Using the epoxy silane coupling agent can enhance the rubber elasticity and adhesiveness of the cured product of the curable composition.

The epoxy silane coupling agent means a compound containing, within one molecule, a silicon atom to which an alkoxy group is bonded and a functional group containing an epoxy group. The epoxy silane coupling agent is not particularly limited, and examples thereof include 3-glycidoxypropyltrimethoxysilane, 3-glycidoxypropyltriethoxysilane, 3-glycidoxypropylmethyldimethoxysilane, 3-glycidoxypropylethyldiethoxysilane, and 2-(3,4-epoxycyclohexyl)ethyltrimethoxysilane, and 3-glycidoxypropyltriethoxysilane is preferable.

The content of the epoxy silane coupling agent in the curable composition is preferably 0.3 parts by mass or more, more preferably 0.4 parts by mass or more, more preferably 0.45 parts by mass or more, and more preferably 0.5 parts by mass or more, relative to 100 parts by mass of the curable resin. The content of the epoxy silane coupling agent in the curable composition is preferably 20 parts by mass or less, more preferably 10 parts by mass or less, more preferably 6 parts by mass or less, and particularly preferably 4 parts by mass or less, relative to 100 parts by mass of the curable resin. The epoxy silane coupling agent, when contained in an amount of 0.3 parts by mass or more, enhances curability and adhesiveness of the curable composition.

The thixotropy imparting agent may be any agent capable of causing the curable composition to exhibit thixotropic properties. Preferred examples of the thixotropy imparting agent include hydrogenated castor oil, fatty acid bisamide, and fumed silica.

The content of the thixotropy imparting agent in the curable composition is preferably 0.1 parts by mass or more, and more preferably 1 part by mass or more, relative to 100 parts by mass of the curable resin. The content of the thixotropy imparting agent in the curable composition is preferably 200 parts by mass or less, and more preferably 150 parts by mass or less, relative to 100 parts by mass of the curable resin. The thixotropy imparting agent, when contained in the curable composition in an amount of 0.1 parts by mass or more, can effectively impart thixotropic properties to the curable composition.

The thixotropy imparting agent, when contained in the curable composition in an amount of 200 parts by mass or less, allows the curable composition to have an appropriate viscosity, thereby enhancing the handleability of the curable composition.

Examples of the ultraviolet absorber include a benzotriazole-based ultraviolet absorber and a benzophenone-based ultraviolet absorber, and a benzotriazole-based ultraviolet absorber is preferable. The content of the ultraviolet absorber in the curable composition is preferably 0.1 parts by mass or more relative to 100 parts by mass of the curable resin. The content of the ultraviolet absorber in the curable composition is preferably 20 parts by mass or less, and more preferably 10 parts by mass or less, relative to 100 parts by mass of the curable resin.

Examples of the antioxidant include a hindered phenol-based antioxidant, a monophenol-based antioxidant, a bisphenol-based antioxidant, and a polyphenol-based antioxidant, and a hindered phenol-based antioxidant is preferable. The content of the antioxidant in the curable composition is preferably 0.1 parts by mass or more, and more preferably 0.3 parts by mass or more, relative to 100 parts by mass of the curable resin. The content of the antioxidant in the curable composition is preferably 20 parts by mass or less, and more preferably 10 parts by mass or less, relative to 100 parts by mass of the curable resin.

[Light stabilizer]

The curable composition preferably contains a hindered amine-based light stabilizer. Using the hindered amine-based light stabilizer can provide a curable composition capable of maintaining excellent rubber elasticity for an extended period of time after curing.

Examples of the hindered amine-based light stabilizer include a mixture of bis(1,2,2,6,6-pentamethyl-4-piperidyl)sebacate and methyl 1,2,2,6,6-pentamethyl-4-piperidylsebacate, bis(2,2,6,6-tetramethyl-4-piperidyl)sebacate, a polycondensate of dibutylamine·1,3,5-triazine·N,N'-bis(2,2,6,6-tetramethyl-4-piperidyl-1,6-hexamethylenediamine and N-(2,2,6,6-tetramethyl-4-piperidyl)butylamine, poly[{6-(1,1,3,3-tetramethylbutyl)amino-1,3,5-triazine-2,4-diyl}{(2,2,6,6-tetramethyl-4-piperidyl)imino}hexamethylene{ (2,2,6,6-tetramethyl-4-piperidyl)imino}], and a polycondensate of dimethyl succinate and 4-hydroxy-2,2,6,6-tetramethyl-1-piperidineethanol.

As the hindered amine-based light stabilizer, an NOR-type hindered amine-based light stabilizer is preferably mentioned. Using the NOR-type hindered amine-based light stabilizer can provide a curable composition in which a decrease in rubber-elasticity with time after curing is suppressed.

The NOR-type hindered amine-based light stabilizer has an NOR structure in which an alkyl group (R) is bonded to a nitrogen atom (N) contained in a piperidine ring skeleton via an oxygen atom (O). The number of carbon atoms of the alkyl group in the NOR structure is preferably 1 to 20, more preferably 1 to 18, and particularly preferably 18. Examples of the alkyl group include a linear alkyl group, a branched alkyl group, and a cyclic alkyl group (saturated alicyclic hydrocarbon group).

Examples of the linear alkyl group include a methyl group, an ethyl group, an n-propyl group, an n-butyl group, an n-pentyl group, an n-hexyl group, an n-octyl group, an n-nonyl group, and an n-decyl group. Examples of the branched alkyl group include isopropyl, isobutyl, sec-butyl, and tert-butyl. Examples of the cyclic alkyl group (saturated alicyclic hydrocarbon group) include a cyclopentyl group, a cyclohexyl group, and a cyclooctyl group. In addition, the hydrogen atom constituting the alkyl group may be substituted with a halogen atom (for example, a fluorine atom, a chlorine atom, a bromine atom, or the like) or a hydroxyl group.

Examples of the NOR-type hindered amine-based light stabilizer include a hindered amine-based light stabilizer represented by the following formula (I).

[Chemical formula 1]

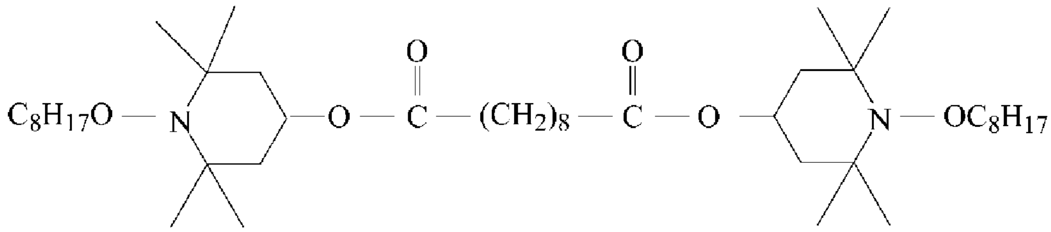

(I)

When the NOR-type hindered amine-based light stabilizer is used, it is preferable to use the NOR-type type hindered amine-based light stabilizer in combination with a benzotriazole-based ultraviolet absorber or a triazine-based ultraviolet absorber. Using such a combination can provide a curable composition in which a decrease in rubber elasticity with time after curing is more significantly suppressed.

The content of the hindered amine-based light stabilizer in the curable composition is preferably 0.01 parts by mass or more, and more preferably 0.1 parts by mass or more, relative to 100 parts by mass of the curable resin. The content of the hindered amine-based light stabilizer in the curable composition is preferably 20 parts by mass or less, and more preferably 10 parts by mass or less, relative to 100 parts by mass of the curable resin.

[Curable composition]

The curable composition can be produced by mixing the curable resin, the poorly water-soluble phosphorus-based compound, and, if necessary, a silanol condensation catalyst and/or an additive. Note that the curable composition may be in the form of a suspension or an emulsion by being suspended or emulsified in an aqueous solvent. The curable composition may be in the form of a solution in which the composition is dissolved in a solvent. Note that examples of the aqueous solvent include an alcohol such as ethyl alcohol, methyl alcohol, and isopropyl alcohol, and water. Examples of the solvent include xylene, toluene, and acetone.

The curable composition after curing, that is, the cured product of the curable composition, has an elution rate, after being immersed in water at 23°C for one week, of preferably 3% or less, more preferably 2.8% or less, more preferably 2.5% or less, and more preferably 2.0% or less. The cured product of the curable composition having an elution rate of 3% or less can maintain excellent rubber elasticity even after being exposed to moisture such as rainwater. Thus, the cured product of such a curable composition can smoothly follow the dimensional changes in the sealing section over an extended period of time.

The elution rate of the cured product of the curable composition immersed in water at 23°C for one week can be measured according to the following procedure. First, the curable composition is cured for one week in an atmosphere at 23°C and a relative humidity of 50% to produce a cured product, and 5.00 g of this cured product is weighed out to prepare a sample. Next, a container to hold water is prepared, and a mass ($W_1$) of this container is measured. Then, 100 mL of water is put into the container, and the container is sealed with a lid while the entire sample is completely immersed in the water, and the sample is left to stand in an atmosphere of 23°C for one week. Next, the sample is removed from the water, and the container is left to stand at 60°C for one week to completely evaporate the remaining moisture in the container and dry, thereby forming a precipitate in the container. After that, the mass ($W_2$) of the container is measured. Then, the elution rate (%) is calculated based on the following formula (2) as follows. A value calculated by subtracting the mass of the container ($W_1$) from the mass of the container ($W_2$) is defined as the mass of the precipitate remaining in the container. Then, this mass of the precipitate is divided by the mass of the sample (5.00 g) before immersion in water.

$$\text{Elution rate (\%)} = 100 \times (W_2 - W_1) / 5.00 \quad \text{Formula (2)}$$

The curable composition after curing, that is, the cured product of the curable composition, has a rubber elasticity, at 23°C according to Shore A, of preferably 5 or more, more preferably 10 or more. The curable composition after curing, that is, the cured product of the curable composition, has a rubber elasticity, at 23°C according to Shore A, of preferably 50 or less, more preferably 40 or less. The cured product of the curable composition with a rubber elasticity, at 23°C according to Shore A, of 5 or more can exhibit excellent rubber elasticity even when heated by the heat of a fire, smoothly follow the expansion of the sealing section, and stably maintain the closing of the sealing section. The cured product of the curable composition with a rubber elasticity, at 23°C according to Shore A, of 50 or less does not become too hard during a fire, making it possible to reduce the formation of breaking points in the sealing section constituent member caused by an increase in the difference in hardness between the sealing section constituent member that becomes brittle due to the heat of a fire and the cured product of the curable composition, thereby stably maintaining the shape of the sealing section constituent member during a fire. Thus, this curable composition is preferable

The Shore A rubber elasticity of the cured product of the curable composition refers to a value measured as follows. The curable composition is cured to harden for one week in an atmosphere of 23°C and a relative humidity of 50% to produce a cured product. Then, this cured product is subjected to measurement at a measurement temperature of 23°C using a type A durometer in accordance with JIS K 6253.

After the curable composition is cured, the cured product of the curable composition has a rubber elasticity, at 23°C according to Shore A, of preferably 40 or more after being burnt at 600°C and then left to stand at 23°C for 1 hour. The cured product with a rubber elasticity, at 23°C according to Shore A, of 40 or more after being burnt at 600°C and then left to stand at 23°C for 1 hour can allow the combustion residue of the cured product of the curable composition to be stably held in the sealing section, making it possible to stably maintain the closing of the sealing section.

The rubber elasticity of the cured product of the curable composition, at 23°C according to Shore A, after being burnt at 600°C and then being left to stand at 23°C for 1 hour is measured as follows. The curable composition is cured to harden for one week in an atmosphere of 23°C and a relative humidity of 50% to produce a cured product. As a sample, 100 g of the cured product of the curable composition is prepared. The sample is placed in a combustion furnace. The sample is burnt in the combustion furnace at 600°C for 30 minutes. Immediately after the combustion, the combustion residue obtained by burning the sample is left to stand in an atmosphere of 23°C for one hour. Next, the Shore A rubber elasticity of the combustion residue is measured at a measurement temperature of 23°C using a type A durometer in accordance with JIS K 6253.

The curable composition can be suitably used as a sealing material. The curable composition can be used as the sealing material to construct a panel structure. As a method for constructing the panel structure by applying the curable composition to the sealing section of a building structure, a method, in which the curable composition is filled in the sealing section and then cured to harden, is used. The obtained panel structure includes a panel installation section of the building structure, a panel member installed in the panel installation section of the building structure, and a cured product of the curable composition filled between the opposing surfaces of the panel installation section and the panel member.

Examples of the panel members include a mortar board, a flexible board, a gypsum board, a calcium silicate board, a medium density fiberboard, a particle board, a wood-based plywood, and a hard fiberboard. Among these, a gypsum board is preferable.

Examples of the panel installation section include a wall of a building structure. Examples of the wall include an exterior wall, an interior wall, and a ceiling, and an exterior wall is preferable.

The sealing section is not particularly limited, and examples thereof include a gap formed between a panel installation section formed in a building structure and a panel member installed in this panel installation section, and a gap formed between the opposing surfaces of adjacent panel members.

The sealing structure includes sealing section constituent members and the cured product of the curable

composition filled between these sealing section constituent members.

There is no particular limitation on a material that constitutes the panel installation section and the panel member. However, the panel structure with excellent fire resistance can be provided by using a gypsum board. Thus, in the panel structure, it is preferable that at least one of the panel installation section or the panel member is a gypsum board.

In the event of a fire, the panel member that constitutes the panel structure may be heated to about 300°C and shrink by the heat of a fire. In such a case, the sealing section expands. On the other hand, the cured product of the curable composition can maintain excellent rubber elasticity and expand smoothly even when heated to about 400°C due to the heat of a fire. Thus, the cured product can smoothly follow the expansion of the sealing section and reliably maintain the closing state of the sealing section.

The cured product of the curable composition generates strong combustion residue when burnt by the heat of a fire. This combustion residue fills the sealing section of the building structure and reliably maintains the closing state of the sealing section even in the event of a fire, making it possible to prevent flames from penetrating through the sealing section and impart excellent fire resistance to the panel structure of a building structure.

Advantageous Effects of Invention

The cured product of the curable composition of the present invention exhibits excellent rubber elasticity even when heated to about 400°C. Thus, when the curable composition is used as the sealing material, even if the sealing section expands in the event of a fire, the cured product of the curable composition can smoothly follow the expansion of the sealing section and stably maintain the closing state of the sealing section.

The curable composition of the present invention generates strong combustion residue upon combustion of the cured product. This combustion residue fills the sealing section and reliably maintains the closing state even in the event of a fire, making it possible to prevent flames from penetrating through the sealing section and impart excellent fire resistance to the panel structure of a building structure.

Since the curable composition of the present invention includes the poorly water-soluble phosphorus-based compound, the cured product exhibits excellent rubber elasticity when heated to about 400°C and provides hard combustion residue, even after repeated exposure to moisture such as rainwater over an extended period of time. Thus, the cured product can reliably maintain the filling state of the sealing section while following the dimensional changes in the sealing section caused by the heat of a fire or the like, making it possible to impart excellent fire resistance to a building structure.

Description of Embodiments

Hereinafter, the present invention will be described in more detail with reference to Examples, but the present invention is not limited thereto.

Examples

The following raw materials were used for producing the curable compositions of Examples and Comparative examples.

[Curing resin]

[Polyalkylene oxide having hydrolyzable silyl group]

· Polyalkylene oxide having a hydrolyzable silyl group

(1) (polyalkylene oxide having a main chain skeleton of polypropylene oxide and having a methyldimethoxysilyl group at the end of the main chain not via a urethane bond or an alkylene group, number-average molecular weight: 16,000, product name "EXESTAR S3430" manufactured by AGC Inc.)

· Polyalkylene oxide having a hydrolyzable silyl group

(2) (polyalkylene oxide having a main chain skeleton of polyalkylene oxide and having methyldimethoxysilyl groups at both ends of the main chain via urethane bonds and methylene groups, weight-average molecular weight: 50,000, number-average molecular weight: 30,000, average number of methyldimethoxysilyl groups per

molecule: 2.0, product name "STP-E30" manufactured by Wacker Chemie AG)

[Acrylic polymer having hydrolyzable silyl group]

· Acrylic polymer (acrylic polymer having a main chain skeleton of a butyl acrylate-stearyl acrylate copolymer (butyl acrylate component content: 70% by mass, stearyl acrylate component content: 30% by mass) and having a methyldimethoxysilyl group at the end of the main chain skeleton, product name "SA310S" manufactured by Kaneka Corp., average number of methyldimethoxysilyl groups per molecule: 2.0, weight-average molecular weight: 34,000)

[Urethane prepolymer having isocyanate group]

Sixty parts by mass of polyoxypropylene triol (product name "EXCENOL 3030" manufactured by AGC Inc., number-average molecular weight 3,000) was placed in a reaction vessel and heated at 110°C under reduced pressure for 6 hours to dehydrate. Next, the inside of the reaction vessel was heated to 80°C, and 10 parts by mass of tolylenediisocyanate (product name "TDI-80" manufactured by Mitsui Chemicals, Inc.) [molar ratio (NCO) / (OH) = 2.0] was added while stirring under a nitrogen atmosphere, and the mixture was further stirred and mixed for 24 hours to obtain a urethane prepolymer (number-average molecular weight 30,000) having a terminal isocyanate group. The resulting urethane prepolymer did not include any hydrolyzable silyl group.

[Dry-curing acrylic polymer]

In a reaction vessel equipped with a stirrer, a reflux condenser, a thermometer, and a dropping funnel, 20.6 parts by mass of water and 0.05 parts by mass of an anionic surfactant (product name "ELEMINOL ES-70" manufactured by Sanyo Chemical Industries, Ltd.) were placed, and heated to 68°C. Next, while stirring the inside of the reaction vessel, 1.7 parts by mass of a 10% by mass aqueous solution of ammonium persulfate was added as a polymerization initiator to the reaction vessel.

Meanwhile, raw material monomers including 88.4 parts by mass of 2-ethylhexyl acrylate, 5 parts by mass of butyl acrylate, 5 parts by mass of acrylonitrile, 1.5 parts by mass of acrylic acid, and 0.1 parts by mass of glycidyl methacrylate, 2.7 parts by mass of an anionic surfactant (product name "ELEMINOL ES-70" manufactured by Sanyo Chemical Industries, Ltd.), and 2.1 parts by mass of a nonionic surfactant (product name "NOIGEN ET-160" manufactured by DKS Co. Ltd.) were added to 44.4 parts by mass of water and dispersed and emulsified using a high-speed stirrer to produce an emulsion.

The resulting emulsion was continuously dropped into the reaction vessel using a dropping funnel over 4 hours. During this time, the polymerization temperature was kept at 72 to 75°C, and after the dropping, a maturation reaction was performed at 75 to 80°C for 3 hours to perform emulsion polymerization of the raw material monomers, thereby obtaining a particulate acrylic emulsion resin.

After the emulsion polymerization, the inside of the reaction vessel was cooled to 30°C. Next, 0.63 parts by mass of a 25% by mass aqueous solution of ammonia, 0.01 parts by mass of an anti-foaming agent (product name "ADEKA NATE B 940" manufactured by Adeka Corp.), 0.46 parts by mass of a preservative and antifungal agent (chloroacetamide manufactured by Clariant (Japan) K.K.), and 3 parts by mass of a 60% by mass aqueous solution of a wetting agent (product name "NONIPOL 110" manufactured by Sanyo Chemical Industries, Ltd.) were added and mixed into the reaction vessel. As a result, an acrylic emulsion composition (non-volatile content: 60.1% by mass, viscosity (23°C) 4,650 mPa·s, pH: 4.8) in which particulate acrylic emulsion resins (weight-average molecular weight: 232,000, glass transition temperature (Tg): -62.8°C) were dispersed in water as an aqueous solvent was obtained. Note that the acrylic emulsion resin did not have any hydrolyzable silyl group.

[Phosphorus-based compound]

· Aluminum phosphite (poorly water-soluble phosphorus-based compound, solubility: 0.01 g/100g-$H_2O$)
· Monobasic aluminum phosphate (poorly water-soluble phosphorus-based compound, solubility: 0.01 g/100g-$H_2O$)
· Ammonium polyphosphate 1 (solubility: 0.5 g/100g-$H_2O$)
· Ammonium polyphosphate 2 (microencapsulated ammonium polyphosphate, solubility: 0.09 g/100g-$H_2O$)

[Silanol condensation catalyst]

- Silanol condensation catalyst (1) (1,1,3,3-tetrabutyl-1,3-dilauryloxycarbonyl-distanoxane, trade name "NEOSTANN U-130" manufactured by Nitto Kasei Co., Ltd.)
- Silanol condensation catalyst (2) (dibutyltin diacetate)

[Curing catalyst]

- Curing catalyst (1) (dibutyltin diacetate)

[Calcium carbonate]

- Colloidal calcium carbonate (trade name "CCR" manufactured by Shiraishi Kogyo K.K., average particle diameter: 0.08 μm)
- Heavy calcium carbonate (trade name "NCC2310" manufactured by Nitto Funka Kogyo K.K., average particle diameter: 1 μm)

[Amino silane coupling agent]

- N-(2-aminoethyl)-3-aminopropyltrimethoxysilane (trade name "KBM-603" manufactured by Shin-Etsu Chemical Co., Ltd.)

[Epoxy silane coupling agent]

- 3-glycidoxypropyltrimethoxysilane (trade name "KBM-403" manufactured by Shin-Etsu Chemical Co., Ltd.)

[Antioxidant]

- Hindered phenol-based antioxidant (trade name "Irganox 1010" manufactured by BASF Japan)

[Plasticizer]

- Plasticizer (dioctyl phthalate)

[Dryness adjusting agent]

- Dryness adjusting agent (polyoxyethylene alkyl phenyl ether, trade name "Nonipol 110" manufactured by Sanyo Chemical Industries, Ltd.)

[Antifreezing agent]

· Antifreezing agent (ethylene glycol)

(Examples 1 to 7, Comparative examples 1 to 3)

The polyalkylene oxide having a hydrolyzable silyl group (1), the polyalkylene oxide having a hydrolyzable silyl group (2), the acrylic polymer having a hydrolyzable silyl group, the urethane prepolymer having an isocyanate group, the phosphorus-based compound, the silanol condensation catalyst, the curing catalyst (1), calcium carbonate, the amino silane coupling agent, the epoxy silane coupling agent, and the hindered phenol-based antioxidant were mixed in the blending amounts shown in Table 1 using a planetary mixer under a vacuum atmosphere for 60 minutes until the mixture became uniform, thereby obtaining a curable composition.

(Example 8)

The acrylic emulsion composition, the phosphorus-based compound, calcium carbonate, the hindered phenol-based antioxidant, the plasticizer, the dryness adjusting agent, and the antifreezing agent were mixed for 60 minutes using a planetary mixer until the mixture became uniform to obtain a curable composition. The blending amount of each component in the obtained curable composition was as shown in Table 1.

Regarding the resulting curable composition, the elution rate of the cured product immersed in water at 23°C for one week was measured as described above, and the results are shown in Table 1. Note that, in Table 1, the "elution rate of the cured product immersed in water at 23°C for one week" is represented as "Elution rate (after water immersion)".

Regarding the resulting curable composition, the rubber elasticity of the cured product at 23°C according to Shore A, and the rubber elasticity, at 23°C according to Shore A, of the cured product after being burnt at 600°C and then allowed to stand at 23°C for 1 hour were measured as described above, and the results are shown in Table 1.

Regarding the resulting curable composition, the rubber elasticity, at 23°C according to Shore A, of the cured product after immersed in water at 23°C, burnt at 600°C, and then allowed to stand at 23°C for 1 hour was measured as described below, and the results are shown in Table 1.

Note that, in Table 1, "the rubber elasticity of the cured product at 23°C according to Shore A," is represented by "Rubber elasticity (before combustion)", "the rubber elasticity at 23°C according to Shore A after being burnt at 600°C and then allowed to stand at 23°C for 1 hour" is represented by "Rubber elasticity (after combustion)", and "the rubber elasticity, at 23°C according to Shore A, of the cured product after immersed in water at 23°C, burnt at 600°C, and then allowed to stand at 23°C for 1 hour" is represented by "Rubber elasticity (after water immersion and combustion)".

[Rubber elasticity (after water immersion and combustion)]

The curable composition was cured to harden for one week in an atmosphere of 23°C and a relative humidity of 50% to produce a cured product. As a sample, 100 g of the cured product of the curable composition was prepared, and was immersed in 1,000 g of water at 23°C for 3 days. The sample was removed from the water and dried at 23°C for 6 hours. The sample was placed in a combustion furnace. The sample was burnt in the combustion furnace at 600°C for 30 minutes. A combustion residue obtained by burning the sample was allowed to stand in an atmosphere of 23°C for 1 hour immediately after the combustion. The Shore A rubber elasticity of the combustion residue was measured at a measurement temperature of 23°C using a type A durometer in accordance with JIS K 6253.

[Table 1]

| | | Example | | | | | | | | Comparative Example | | |
|---|---|---|---|---|---|---|---|---|---|---|---|---|
| | | 1 | 2 | 3 | 4 | 5 | 6 | 7 | 8 | 1 | 2 | 3 |
| Curable composition (parts by mass) | Polyalkylene oxide having hydrolyzable silyl group (1) | 100 | 100 | 100 | 100 | 0 | 0 | 0 | 0 | 100 | 100 | 100 |
| | Polyalkylene oxide having hydrolyzable silyl group (2) | 0 | 0 | 0 | 0 | 0 | 0 | 100 | 0 | 0 | 0 | 0 |
| | Acrylic polymer having hydrolyzable silyl group | 0 | 0 | 0 | 0 | 100 | 0 | 0 | 0 | 0 | 0 | 0 |
| | Urethane prepolymer having isocyanate group | 0 | 0 | 0 | 0 | 0 | 100 | 0 | 0 | 0 | 0 | 0 |
| | Acrylic emulsion resin | 0 | 0 | 0 | 0 | 0 | 0 | 0 | 100 | 0 | 0 | 0 |
| | Aluminum phosphite | 40 | 0 | 10 | 90 | 40 | 40 | 40 | 40 | 0 | 0 | 0 |
| | Monobasic aluminum phosphate | 0 | 40 | 0 | 0 | 0 | 0 | 0 | 0 | 0 | 0 | 0 |
| | Ammonium polyphosphate 1 | 0 | 0 | 0 | 0 | 0 | 0 | 0 | 0 | 0 | 40 | 0 |
| | Microencapsulated ammonium polyphosphate | 0 | 0 | 0 | 0 | 0 | 0 | 0 | 0 | 0 | 0 | 40 |
| | Silanol condensation catalyst (1) | 1 | 1 | 1 | 1 | 0 | 0 | 0 | 0 | 1 | 1 | 1 |
| | Silanol condensation catalyst (2) | 0 | 0 | 0 | 0 | 1 | 0 | 1 | 0 | 0 | 0 | 0 |
| | Curing catalyst (1) | 0 | 0 | 0 | 0 | 0 | 0.03 | 0 | 0 | 0 | 0 | 0 |
| | Colloidal calcium carbonate | 80 | 80 | 80 | 80 | 80 | 80 | 80 | 80 | 80 | 80 | 80 |
| | Heavy calcium carbonate | 80 | 80 | 80 | 80 | 80 | 80 | 80 | 80 | 80 | 80 | 80 |
| | Aminosilane coupling agent | 2 | 2 | 2 | 2 | 2 | 0 | 2 | 0 | 2 | 2 | 2 |
| | Epoxysilane coupling agent | 0 | 0 | 0 | 0 | 0 | 2 | 0 | 0 | 0 | 0 | 0 |
| | Hindered phenol-based antioxidant | 1 | 1 | 1 | 1 | 1 | 1 | 1 | 1 | 1 | 1 | 1 |
| | Water | 0 | 0 | 0 | 0 | 0 | 0 | 0 | 70 | 0 | 0 | 0 |
| | Anionic surfactant (ELEMINOL ES-70) | 0 | 0 | 0 | 0 | 0 | 0 | 0 | 2 | 0 | 0 | 0 |
| | Nonionic surfactant (NOIGEN ET-160) | 0 | 0 | 0 | 0 | 0 | 0 | 0 | 2 | 0 | 0 | 0 |
| | Anti-foaming agent | 0 | 0 | 0 | 0 | 0 | 0 | 0 | 0.5 | 0 | 0 | 0 |
| | Preservative and antifungal agent | 0 | 0 | 0 | 0 | 0 | 0 | 0 | 0.5 | 0 | 0 | 0 |
| | Wetting agent | 0 | 0 | 0 | 0 | 0 | 0 | 0 | 1 | 0 | 0 | 0 |
| | Plasticizer | 0 | 0 | 0 | 0 | 0 | 0 | 0 | 25 | 0 | 0 | 0 |
| | Dryness adjusting agent | 0 | 0 | 0 | 0 | 0 | 0 | 0 | 1 | 0 | 0 | 0 |
| | Antifreezing agent | 0 | 0 | 0 | 0 | 0 | 0 | 0 | 2 | 0 | 0 | 0 |
| Evaluation | Rubber elasticity (before combustion) | 20 | 20 | 18 | 35 | 16 | 24 | 21 | 16 | 20 | 18 | 18 |
| | Rubber elasticity (after combustion) | 60 | 43 | 55 | 60 | 57 | 55 | 58 | 50 | 5 | 25 | 30 |
| | Rubber elasticity (after water immersion and combustion) | 60 | 43 | 55 | 60 | 57 | 55 | 58 | 50 | 5 | 10 | 10 |
| | Elution rate (after water immersion) | 1.6% | 1.9% | 0.8% | 2.3% | 1.5% | 2.4% | 1.8% | 2.6% | 1.0% | 9.2% | 5.0% |

Industrial Applicability

The curable composition of the present invention exhibits excellent rubber elasticity even when the cured product is heated to about 400°C. Furthermore, the curable composition can generate the strong combustion residue upon combustion. Thus, the curable composition can be suitably used as a sealing material.

(Cross-reference to related application)

The present application claims the priority under Japanese Patent Application No. 2022-096483, filed on June 15, 2022, the disclosure of which is herein incorporated in its entirety by reference.

## Claims

1. A curable composition for a sealing material, comprising:

   100 parts by mass of a curable resin; and
   10 to 150 parts by mass of a poorly water-soluble phosphorus-based compound.

2. The curable composition for a sealing material according to claim 1, wherein the curable resin includes at least one type selected from the group consisting of a polyalkylene oxide having a hydrolyzable silyl group, an acrylic polymer having a hydrolyzable silyl group, a urethane prepolymer having an isocyanate group, and a dry-curing acrylic polymer.

3. The curable composition for a sealing material according to claim 1, wherein the curable resin is a polyalkylene oxide having a hydrolyzable silyl group.

4. The curable composition for a sealing material according to claim 1, wherein the poorly water-soluble phosphorus-based compound includes aluminum phosphite.

5. The curable composition for a sealing material according to claim 3, wherein the curable composition includes a silanol condensation catalyst.

6. The curable composition for a sealing material according to claim 1, wherein the curable composition after curing has an elution rate, after immersed in water at 23°C for one week, of 3% or less.

7. A panel structure comprising:

   a panel installation section of a building structure;
   a panel member installed in the panel installation section of the building structure; and a cured product of the curable composition for a sealing material according to claim 1, the cured product being filled between opposing surfaces of the panel installation section and the panel member.

8. The panel structure according to claim 7, wherein the panel installation section is an exterior wall, an interior wall, or a ceiling of the building structure.

9. The panel structure according to claim 7, wherein at least one of the panel installation section or the panel member is a gypsum board.

10. A panel structure comprising:

    panel members adjacent to each other; and
    a cured product of the curable composition for a sealing material according to claim 1, the cured product being filled in a joint section formed between the panel members.

11. The panel structure according to claim 10, wherein the panel member is a gypsum board.

## INTERNATIONAL SEARCH REPORT

International application No. **PCT/JP2022/047915**

**A. CLASSIFICATION OF SUBJECT MATTER**

***C08G 18/10***(2006.01)i; ***C09K 3/10***(2006.01)i
FI: C09K3/10 G; C08G18/10; C09K3/10 E; C09K3/10 D

According to International Patent Classification (IPC) or to both national classification and IPC

**B. FIELDS SEARCHED**

Minimum documentation searched (classification system followed by classification symbols)

C08G18/10; C09K3/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2021-113313 A (SEKISUI FULLER CO LTD) 05 August 2021 (2021-08-05) claims, paragraphs [0081], [0097], examples 1, 4, etc. | 1-11 |
| X | JP 8-253761 A (CHISSO CORP) 01 October 1996 (1996-10-01) claims, paragraphs [0001]-[0005], [0019]-[0030], examples 3-5, etc. | 1-11 |
| X | WO 2022/097740 A1 (SEKISUI CHEMICAL CO LTD) 12 May 2022 (2022-05-12) claims, paragraphs [0064], [0075]-[0096], examples 11-16, etc. | 1-11 |
| X | WO 2019/146565 A1 (CEMEDINE CO LTD) 01 August 2019 (2019-08-01) claims, paragraphs [0143], [0149], example 5, etc. | 1-11 |
| X | WO 2017/126654 A1 (SEKISUI CHEMICAL CO LTD) 27 July 2017 (2017-07-27) claims, paragraphs [0019]-[0022], [0058]-[0065], examples 13, 16-21, etc. | 1-11 |
| A | JP 8-81674 A (MITSUI KINZOKU TORYO KAGAKU KK) 26 March 1996 (1996-03-26) claims, examples, etc. | 1-11 |
| A | JP 2007-155015 A (DENKI KAGAKU KOGYO KK) 21 June 2007 (2007-06-21) claims, examples, etc. | 1-11 |

☐ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 March 2023** | **14 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/047915**

| Patent document cited in search report | Publication date (day/month/year) | Patent family member(s) | Publication date (day/month/year) |
|---|---|---|---|
| JP 2021-113313 A | 05 August 2021 | (Family: none) | |
| JP 8-253761 A | 01 October 1996 | (Family: none) | |
| WO 2022/097740 A1 | 12 May 2022 | (Family: none) | |
| WO 2019/146565 A1 | 01 August 2019 | CN 111601854 A | |
| WO 2017/126654 A1 | 27 July 2017 | EP 3406669 A1<br>claims, paragraphs [0022]-[0025], [0066]-[0074], examples 13, 16-21, etc.<br>KR 10-2018-0103841 A | |
| JP 8-81674 A | 26 March 1996 | (Family: none) | |
| JP 2007-155015 A | 21 June 2007 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI08081674 A
- JP 2022096483 A


### Non-patent literature cited in the description


- Polymer Handbook. POLYMER HANDBOOK. John Wiley & Sons, 1999